# EUROPÄISCHE PATENTSCHRIFT

(11) **EP 4 063 064 B1**
(45) Veröffentlichungstag und Bekanntmachung des Hinweises auf die Patenterteilung: **13.08.2025**
(21) Anmeldenummer: 22000064.0
(22) Anmeldetag: 21.03.2022
(51) Int. Cl.: B23Q 1/00

(54) **NACHRÜSTGRUPPE MIT SPANNSYSTEM**
RETROFIT GROUP WITH TENSIONING SYSTEM
MODULE DE TYPE RETROFIT POURVU DE SYSTÈME DE SERRAGE

(30) Priorität: 22.03.2021 DE 102021001469
(43) Veröffentlichungstag der Anmeldung: 28.09.2022
(73) Patentinhaber: Zimmer, Günther Stephan, 77866 Rheinau (DE); Zimmer, Martin, 77866 Rheinau (DE)
(72) Erfinder: Zimmer, Günther Stephan, 77866 Rheinau (DE); Zimmer, Martin, 77866 Rheinau (DE)
(74) Vertreter: Thämer, Wolfgang

(56) Entgegenhaltungen:
- EP-A1- 2 246 608
- EP-A2- 1 050 363

## Beschreibung

Die Erfindung betrifft ein Werkstück-Aufspannsystem zum Nachrüsten, mit einer Aufsetzplatte und mit einer Werkstück-Aufspannplatte, die mittels mindestens eines Spannsystems miteinander lösbar verbunden sind.

Aus der DE 10 2018 009 226 A1 ist ein Spannsystem aus einer Spannvorrichtung und einem Kombibolzen zum Fixieren eines Werkstücks auf einem Maschinentisch bekannt.

Die EP 2 246 608 A1 offenbart ein nachrüstbares Werkstück-Aufspannspannsystem mit einer Werkstückhauptplatte und mit einer Grundplatte, die mittels zweier Spannsysteme miteinander verbunden sind. Von einer externen Hydraulikquelle aus führt in der Werkstückhauptplatte eine Hydraulikleitung zu den in der Werkstückhauptplatte angeordneten Positioniermechanismen der Spannsysteme und zu einer Rückhubkammer eines Kupplungsunterteils. Eine hiervon vollständig getrennte, aus weiteren externen Quellen gespeiste Luft- oder Ölleitung leitet Luft oder Öl durch eine Kupplung hindurch in die Grundplatte und zu den Werkstückklemmeinheiten.

Aus der EP 1 050 363 A1 ist ein in eine Werkzeugmaschine integriertes Spannsystem mit hydraulisch hiervon getrennten, parallel hierzu angeordneter Kupplungen für eine Medienübertragung bekannt. Während das Spannsystem mittels Hydrauliköl betätigt wird, werden über die Kupplungen Öl, Bohremulsion, Druckluft, Spezialgewindefett für die Werkstücke und die Werkstückklemmung übertragen.

Der vorliegenden Erfindung liegt die Problemstellung zugrunde, ein nachrüstbares Werkstück-Aufspannsystem zu entwickeln.

Diese Problemstellung wird mit den Merkmalen des Hauptanspruches gelöst. Dazu ist in der Werkstück-Aufspannplatte mindestens ein Energiezuführkanal angeordnet, der eine Anschlussfläche der Werkstück-Aufspannplatte mit zumindest einem ersten Medienkupplungsteil verbindet. In der Aufsetzplatte verbindet mindestens ein Medienkanal ein mit dem ersten Medienkupplungsteil kuppelbares zweites Medienkupplungsteil mit mindestens einer Spannvorrichtung des Spannsystems.

Mit dem vorliegenden Werkstück-Aufspannsystem kann ein Nullpunkt-Spannsystem an konventionellen Maschinen temporär oder auf Dauer nachgerüstet werden. Das Spannsystem sichert die Lage der Werkstück-Aufspannplatte relativ zur Aufsetzplatte, die auf dem Maschinentisch fixiert wird. Die Medienversorgung der Spannvorrichtung des Spannsystems, das in der Aufsetzplatte angeordnet ist, erfolgt durch die Medienkupplung und die Aufsetzplatte hindurch. Die mittels der Medienkupplung übertragenen Medien werden von einer externen Quelle an der Anschlussfläche der Werkstück-Aufspannplatte an das Werkstück-Aufspannsystem übertragen. Die Energieführung zur Medienkupplung erfolgt durch die Werkstück-Aufspannplatte hindurch.

Weitere Einzelheiten der Erfindung ergeben sich aus den Unteransprüchen und der nachfolgenden Beschreibung schematisch dargestellter Ausführungsformen.
- Figur 1:: perspektivische Ansicht eines Spannsystems;
- Figur 2:: Schnitt durch das drucklose geschlossene Spannsystem;
- Figur 3:: Schnitt durch das geschlossene Spannsystem mit druckbelastetem Ringkolbenboden;
- Figur 4:: wie Figur 3, jedoch mit ausgefahrenem Reinigungskolben;
- Figur 5:: Schnitt durch das Spannsystem mit druckbelasteter Ringkolbenfrontseite und mit teilweise eingetauchtem Kombibolzen;
- Figur 6:: wie Figur 5, jedoch mit vollständig eingetauchtem, aber unverriegeltem Kombibolzen;
- Figur 7:: wie Figur 6, jedoch mit mittels der Federspannkraft des Ringkolbens verriegeltem Kombibolzen;
- Figur 8:: Spannring von schräg oben;
- Figur 9:: Spannring von schräg unten;
- Figur 10:: Draufsicht auf den Spannring;
- Figur 11:: perspektivische Ansicht einer Verschlusskappe von schräg unten mit ausgefahrenem Reinigungskolben;
- Figur 12:: wie Figur 11, jedoch schräg von der Seite;
- Figur 13:: perspektivische Ansicht des Spannsystems von unten;

- Figur 14:: Industrieroboter mit Werkstück-Aufspannsystem und Maschinentisch;
- Figur 15:: Seitenansicht des Werkstück-Aufspannsystems und des Maschinentischs;
- Figur 16:: Werkstück-Aufspannsystem;
- Figur 17:: Isometrische Unteransicht der Figur 16;
- Figur 18:: Querschnitt der Figur 16 durch die Spannsysteme;
- Figur 19:: Querschnitt der Figur 16 durch eine Medienkupplung;

- Figur 20:: Verriegelungsvorrichtung der Adapterkupplung;
- Figur 21:: Erstes Energieführungsteil;
- Figur 22:: Zweites Energieführungsteil;
- Figur 23:: Adapterkupplung beim Schließen;
- Figur 24:: Geschlossene Adapterkupplung;
- Figur 25:: Isometrische Schnittdarstellung des Bolzenteil der Medienkupplung;
- Figur 26:: Isometrische Darstellung des Bolzenteils von oben;
- Figur 27:: Schieber des Aufnahmeteils der Medienkupplung;
- Figur 28:: Spannsystem und Medienkupplung ohne Eingriff;
- Figur 29:: Spannsystem und Medienkupplung beim Beginn des Kuppelns;
- Figur 30:: Spannsystem und Medienkupplung im Kontakt;
- Figur 31:: Reinigen des Systems;
- Figur 32:: Medienkupplung zum Spannen des Spannsytems;
- Figur 33:: Spannsystem und Medienkupplung gekuppelt.

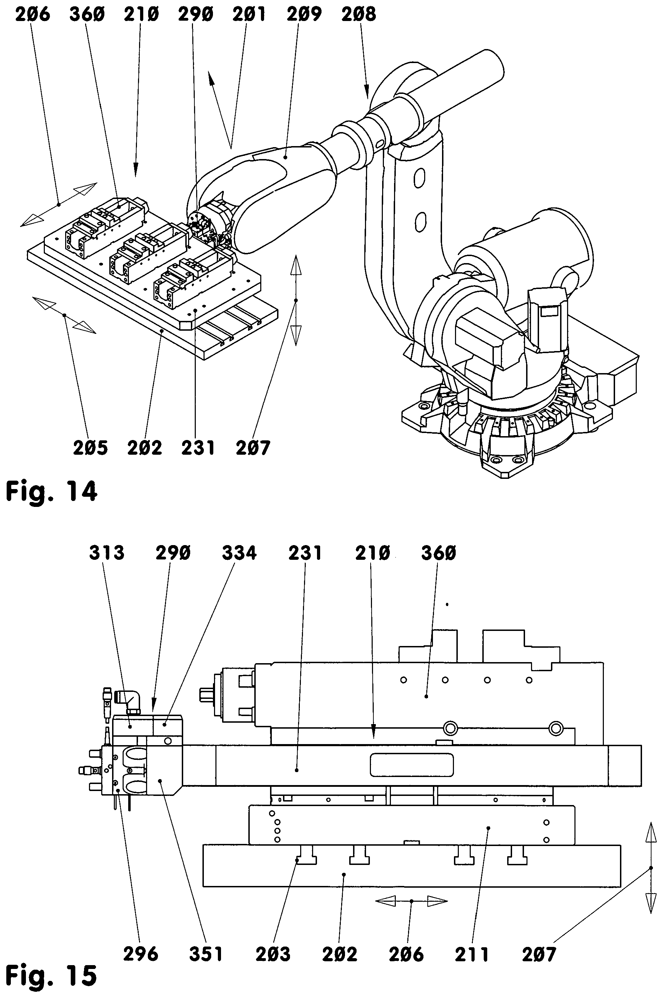

Die Figur 14 zeigt einen Maschinentisch (202) beispielsweise einer Werkzeugmaschine mit einem Werkstück-Aufspannsystem (210) und mit einem Industrieroboter (208). In der Figur 15 ist eine Seitenansicht des Maschinentisches (202) mit dem darauf angeordneten Werkstück-Aufspannsystem (210) dargestellt. Der Maschinentisch (202) ist z.B. ein konventioneller T-Nutentisch zum Fixieren von Werkstücken mittels in den T-Nuten (203) gehaltenen Spannmitteln. Im dargestellten Ausführungsbeispiel hat der Maschinentisch (202) keine Medienversorgung.

Das Werkstück-Aufspannsystem (210) umfasst eine Aufsetzplatte (211) und eine Werkstück-Aufspannplatte (231). Die Aufsetzplatte (211) ist in den Darstellungen der Figuren 14 und 15 auf dem Maschinentisch (202) befestigt. Beispielsweise ist sie mit den genannten Spannmitteln auf diesem fixiert. Die Werkstück-Aufspannplatte (231) ist mittels z.B. mehrerer Spannsysteme (1) in der Aufsetzplatte (211) gehalten. Auf der Werkstück-Aufspannplatte (231) sind Werkstücke (360) aufgespannt. Beispielsweise sind diese Werkstücke (360) mittels Unterdruck auf der Werkstück-Aufspannplatte (231) fixiert. Auch eine andere Werkstückfixierung ist denkbar.

Der Industrieroboter (208) steht in der Darstellung der Figur 14 neben dem Maschinentisch (202). Er ist mittels einer Adapterkupplung (290) an das Werkstück-Aufspannsystem (210) angebunden. Mittels der Adapterkupplung (290) wird Energie vom Industrieroboter (208) an die Werkstück-Aufspannplatte (231) übertragen. Dies kann elektrische, pneumatische und/oder hydraulische Energie sein. Auch Daten und Signale können mittels der Adapterkupplung (290) zwischen dem Industrieroboter (208) und dem Werkstück-Aufspannsystem (210) übertragen werden.

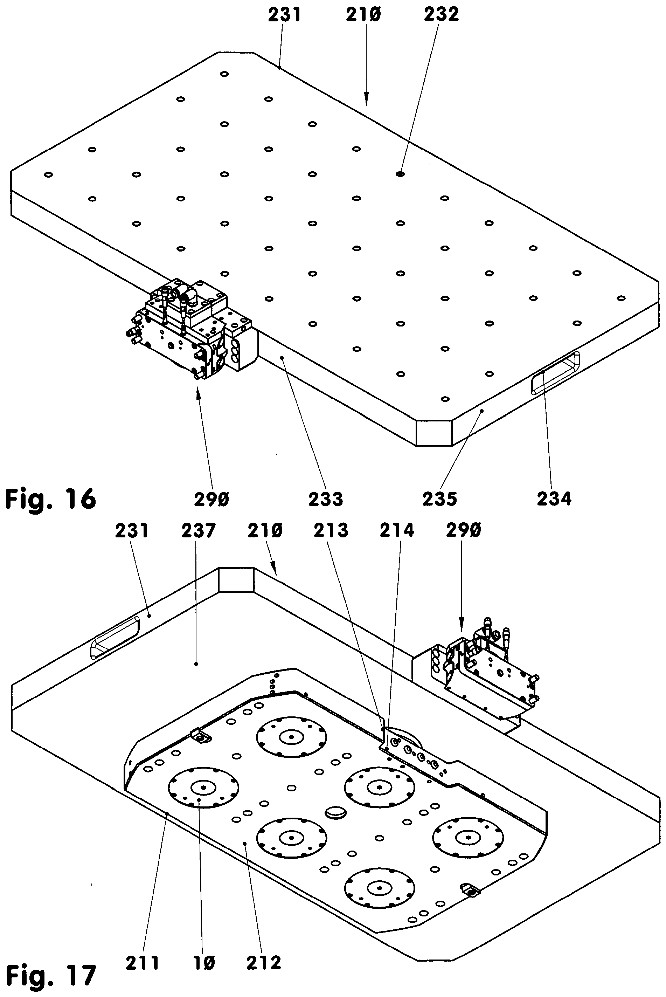

Die Figuren 16 und 17 zeigen eine Draufsicht und eine Unteransicht des Werkstück-Aufspannsystems (210) mit daran angeschlossener Adapterkupplung (290). Die beispielsweise dargestellte Werkstück-Aufspannplatte (231) ist eine zumindest annähernd rechteckige Platte mit einer Vielzahl von Ansaugöffnungen (232) zum Halten der Werkstücke. An einer in Querrichtung (206) orientierten Stirnseite (233) der Werkstück-Aufspannplatte (231) ist die Adapterkupplung (290) fixiert. Diese Stirnseite (233) ist im Folgenden als Anschlussfläche (233) bezeichnet. Zum Transport der Werkstück-Aufspannplatte (231) hat die Werkstück-Aufspannplatte (231) z.B. zwei einander gegenüberliegende Eingreifausnehmungen (234). Diese sind in diesen Darstellungen an den in Längsrichtung (205) orientierten Stirnseiten (235) eingeprägt. Im Ausführungsbeispiel hat die Werkstück-Aufspannplatte (231) eine Länge von 1000 Millimetern und eine Breite von 550 Millimetern. Die Ecken der Werkstück-Aufspannplatte (231) sind z.B. abgeschrägt ausgebildet. Die Dicke der Werkstück-Aufspannplatte (231) beträgt z.B. 50 Millimeter.

Die Aufsetzplatte (211) liegt bei montiertem Werkstück-Aufspannsystem (210) mit ihrer Unterseite (212) auf dem Maschinentisch (202) direkt oder mittels eines Adapters auf. Im Werkstück-Aufspannsystem (210) liegt die Aufsetzplatte (211) zentrisch unter der Werkstück-Aufspannplatte (231). Im dargestellten Ausführungsbeispiel hat die Aufsetzplatte (211) eine Länge von 640 Millimetern und eine Breite von 390 Millimetern. Ihre Dicke beträgt z.B. 48 Millimeter. In der Aufsetzplatte (211) sind von der Unterseite (212) her z.B. sechs Spannvorrichtungen (10) sichtbar. Diese sind beispielsweise in zwei parallelen, in der Längsrichtung (205) orientierten Reihen zu je drei Spannvorrichtungen (10) angeordnet.

An der in Querrichtung (206) orientierten Stirnfläche (213) der Aufsetzplatte (211) münden z.B. mehrere Kanalausgänge (214). Diejenigen Kanalausgänge (214), die für den momentanen Betrieb des Werkstück-Aufspannsystems (210) nicht benötigt werden, können verschlossen sein.

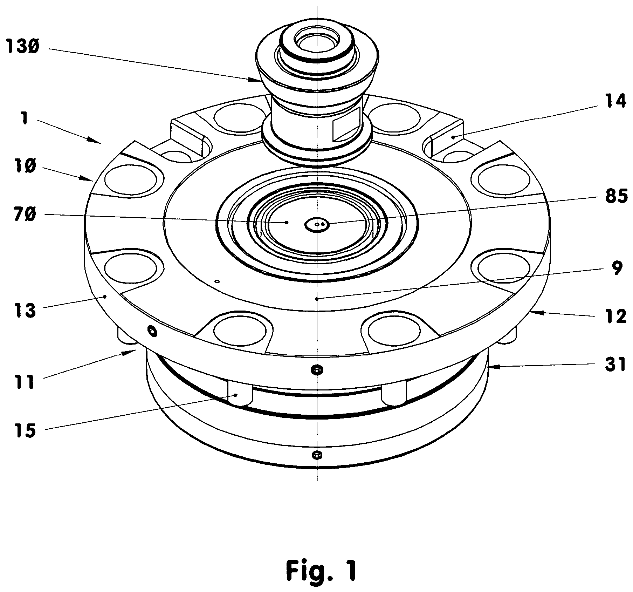

Die Figur 1 zeigt ein Spannsystem (1), das aus einer Spannvorrichtung (10) und einem Kombibolzen (130) besteht. Die Spannvorrichtung (10) ist zur Aufnahme eines Werkstücks beispielsweise in einem Maschinentisch integriert. An dem zu spannenden Werkstück ist in der Regel mindestens ein Kombibolzen (130) - über den das Werkstück am Maschinentisch adaptierbar ist - befestigt. Das Gehäuse (11) der Spannvorrichtung (10) beinhaltet eine Mechanik, die den Kombibolzen (130) wiederholgenau in der Spannvorrichtung (10) positioniert. Diese Mechanik umfasst ein Keilgetriebe (63, 111), dessen Antriebsteil ein Ringkolben (40) ist.

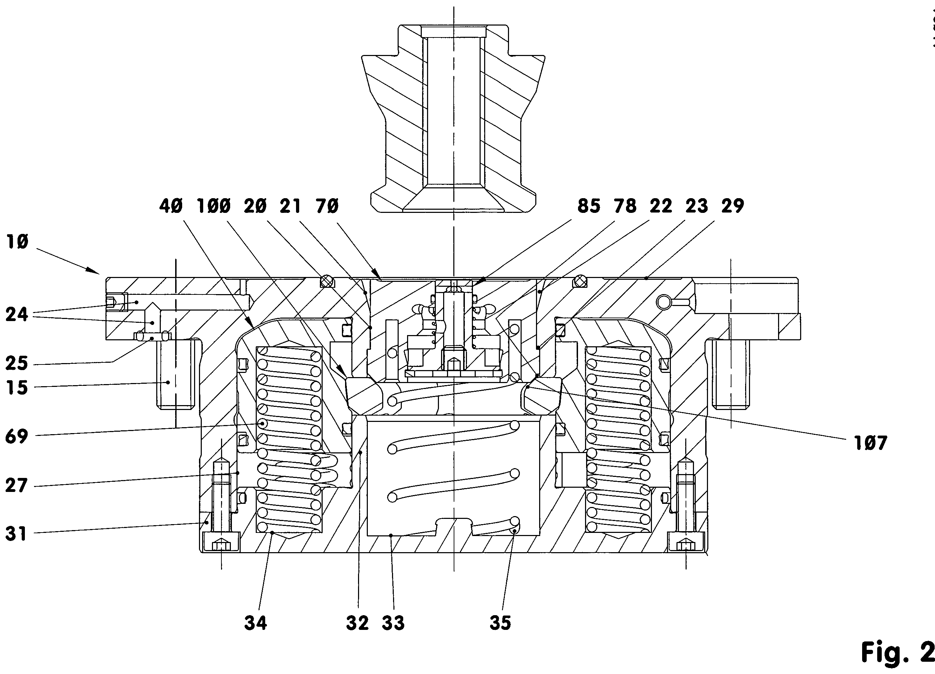

Das in Figur 2 dargestellte Gehäuse (11) besteht im Wesentlichen aus einem flanschartigen Gehäusegrundkörper (12) und einem in der Unterseite des Gehäusegrundkörpers (12) sitzenden Gehäusedeckel (31). Beide Teile sind z.B. aus dem rost-, säure- und hitzebeständigen Stahl X90CrMoV18 gefertigt.

Der einteilige, z.B. 44 mm hohe, Gehäusegrundkörper (12) setzt sich aus einer Flanschplatte (13) und einem daran angeformten Zylinder (27) zusammen. Die Flanschplatte (13) hat hier einen Durchmesser von 112 mm bei einer Wandstärke von 10 mm. Der Zylinder (27) hat einen Außendurchmesser von 86 mm bei einer maximalen Wandstärke von 6 mm. Die Flanschplatte (13) und der Zylinder (27) haben eine gemeinsame Mittellinie (9). Im Übergangsbereich zwischen dem Zylinder (27) und der Bodenseite der Flanschplatte (13) befindet sich zur Erhöhung der Formsteifigkeit des Gehäusegrundkörpers (12) eine, senkrecht zur Mittellinie (9) gemessen, z.B. 5,5 mm breite Fase (42), deren Kegelwinkel 120 Winkelgrade misst.

Die Flanschplatte (13) hat in ihrem äußeren Bereich, der über den Zylinder (27) übersteht, z.B. acht äquidistant auf dem Umfang verteilte Senkbohrungen zur Aufnahme von Befestigungsschrauben (15), über die die Spannvorrichtung (10) starr am Maschinentisch befestigt werden kann. Die Senkbohrungen sind mit Kunststoffkappen staubdicht verschlossen. Zwischen je zwei Senkbohrungen sind in der Flanschplatte (13) von außen her zwei z.B. 17 mm lange feinbearbeitete Positionierlanglöcher (14) eingearbeitet. Sie haben eine Tiefe von 5,8 mm. Das einzelne Positionierlangloch (14) dient dem Blockieren des Drehfreiheitsgrads um die Mittellinie (9) bei der Verwendung nur eines Kombibolzens (130).

Nach Figur 2 weist die Flanschplatte (13) auf der linken Seite ein Kanalsystem (24) auf, über das ggf. ein zwischen der Flanschplatte (13) und dem aufliegenden Werkstück vorhandener Staudruck zur Kontrolle einer korrekten Werkstückauflage über einen Auflagenkontrollanschluss (25) einem Messgerät zuführbar ist. Für diesen Fall hat die Flanschplatte (13) auf ihrer Oberseite eine Axialringnut (29), die im Ausführungsbeispiel bei einem Innendurchmesser von z.B. 48 mm und einem Außendurchmesser von z.B. 74 mm eine Tiefe von 0,3 mm aufweist. Sofern das auf der Flanschplatte (13) aufliegenden Werkstück die Axialringnut (29) vollständig abdeckt, kann der in Letzterer anliegende Staudruck zur Kontrolle verwendet werden. Die Fläche der Axialringnut (29) beträgt mindestens 25 % der werkstücktragenden Oberseite der Flanschplatte (13).

Die Flanschplatte (13), auf deren Oberseite das jeweilige Werkstück aufliegt, hat im Zentrum eine zentrale Aufnahmeausnehmung (20), die von einem an der Flanschplatte (13) angeformten Stützrohr (16) ummantelt ist. Das nach innen ragende Stützrohr (16) hat bei einer Länge von 9,5 mm eine feinbearbeitete Stirnfläche. Die der Aufnahmeausnehmung (20) abgewandte Wandung des Stützrohrs (16) ist - zur Innenführung des Ringkolbens (40) - eine feinbearbeitete zylindrische Fläche.

Die Aufnahmeausnehmung (20) hat in ihrem oberen Bereich eine kegelstumpfmantelförmige Zentrierspannfläche (21), deren Kegelwinkel z.B. 30 Winkelgrade beträgt. Die Höhe der Zentrierspannfläche (21) misst z.B. 5,6 mm. Im unteren Bereich weist die Aufnahmeausnehmung (20) einen im Durchmesser um z.B. 1 mm aufgeweiteten Hintergriffsabsatz (23) auf.

Die feinbearbeitete außenliegende Innenwandung des Zylinders (27) hat im mittleren Bereich eine umlaufende Entlüftungsnut (28).

Der Gehäusedeckel (31) sitzt über die Innenwandung des Zylinders (27) zentriert und abgedichtet im Gehäusegrundkörper (12). Er weist im Zentrum ein in den Gehäusegrundkörper (12) hineinragendes Anschlagrohr (32) auf, das eine sacklochartige Verschlusskappenausnehmung (33) umgibt. Letztere hat bei einem Durchmesser von 28 mm eine Tiefe von 19,3 mm. Die Mittellinien des Anschlagrohrs (32) und der Verschlusskappenausnehmung (33) liegen auf der Mittellinie (9). Das Anschlagrohr (32) weist zumindest eine feinbearbeitete Stirnfläche auf.

Die Außenwandung des Anschlagrohres (32) hat - ebenfalls zur Innenführung des Ringkolbens (40) - eine feinbearbeitete zylindrische Außenwandung, deren Höhe 11,5 mm misst. Die an das Anschlagrohr (32) anschließende Deckelwandung hat eine Wandstärke von z.B. 10,5 mm. In diesem Bereich verfügt der Gehäusedeckel (31) über zwölf auf einem Kreis um die Mittellinie (9) angeordnete Sacklochbohrungen (34) zur Lagerung und Führung von Schraubendruckfedern (69). Die Sacklochbohrungen (34) haben bei einer Tiefe von 7,3 mm einen Durchmesser von 10,6 mm.

Bei montierter Spannvorrichtung (10) beträgt der Abstand zwischen den Stirnflächen des Stützrohrs (16) und des Anschlagrohrs (32) z.B. 6 mm. Zwischen diesen Stirnflächen ist ein Spannring (100) angeordnet.

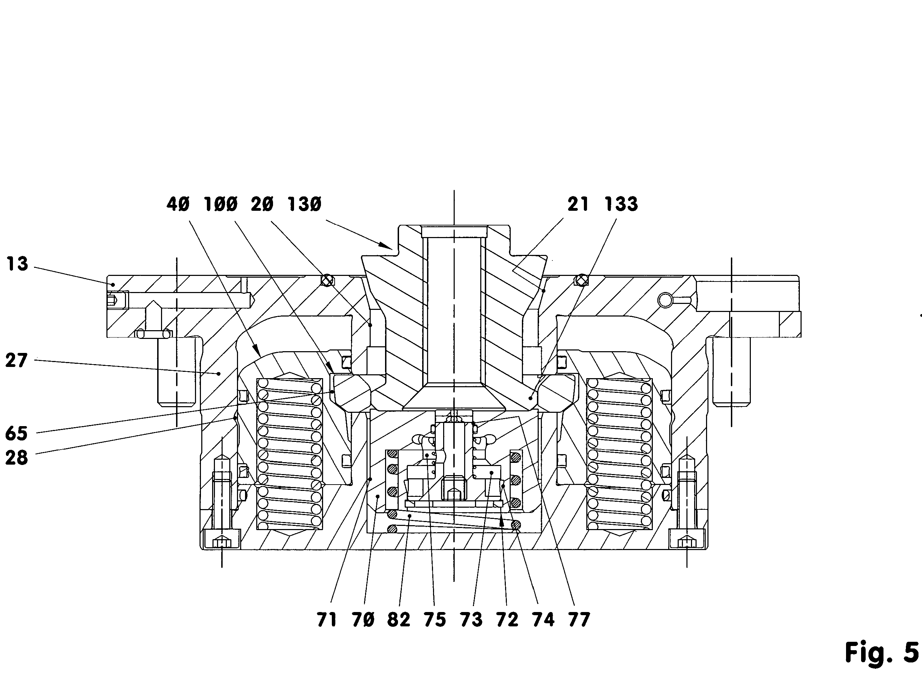

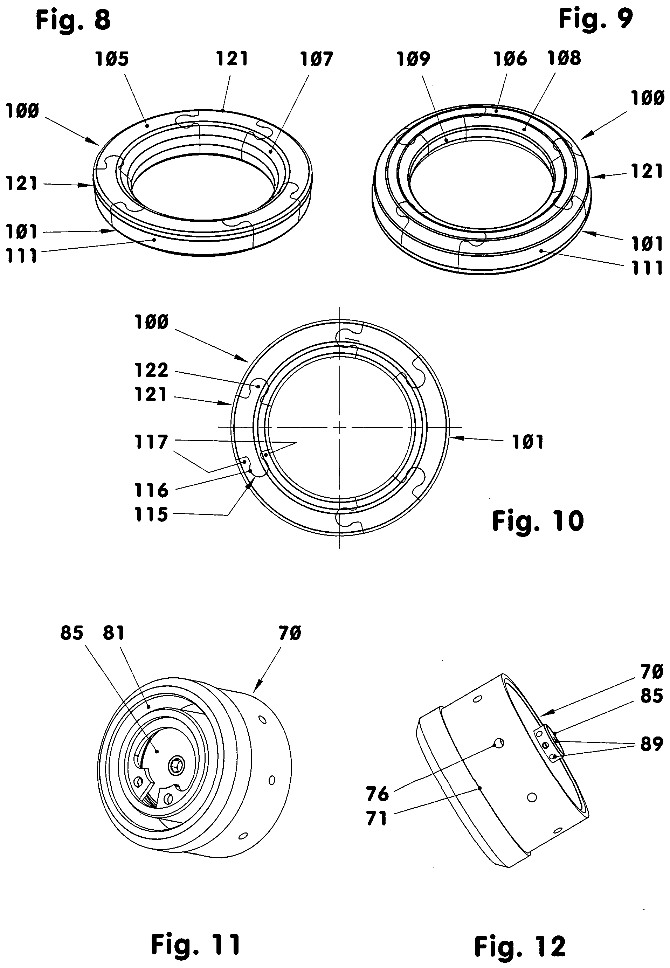

Der Spannring (100), vgl. Figuren 8 und 9, ist ein z.B. aus drei Spannelementen (101) und drei Federelementen (121) montierter Ring, dessen Querschnitt über den gesamten Spannring (100) konstant ist. Die segmentartigen Spannelemente (101) sind aus dem Stahl X90CrMoV18 gefertigt. Die Federelemente sind hier Elastomerkörper (121), die aus einem Gummi- oder einem Gummiersatzwerkstoff hergestellt sind. Die Spannelemente (101) überdecken im Spannring (100) einzeln jeweils 85 Winkelgrade, während die Elastomerkörper (121) 35 Winkelgrade überdecken. Im unverformten Zustand hat der Spannring (100) einen Innendurchmesser von 23 mm und einen Außendurchmesser von 35 mm. Seine in Axialrichtung messbare Breite ist 0,015 mm kleiner als der zwischen den Stirnflächen des Stützrohrs (16) und des Anschlagrohrs (32) gemessene Abstand. Der Innendurchmesser des Spannrings (100) kann im Bedarfsfall auf z.B. 27 mm elastisch ausgedehnt werden, vgl. Figur 5.

Gemäß Figur 5 hat der Spannring (100) einen siebeneckigen Einzelquerschnitt (102). Seine Breite und seine Höhe sind dabei zumindest nahezu identisch. Der Einzelquerschnitt (102) wird oben durch eine plane Spannfläche (105), unten durch eine plane Aufliegefläche (106), innen durch eine zylindrische Innenfläche (109) und außen durch eine kegelstumpfmantelförmige Spannringkeilfläche (111) begrenzt, vgl. auch Figuren 8 und 9. Die Spannringkeilfläche (111) hat einen Kegelwinkel von 12 Winkelgraden.

Zwischen der Innenfläche (109) und der Aufliegefläche (106) befindet sich als Fase eine kegelstumpfmantelförmige Hüllspannfläche (108), deren Kegelwinkel 120 Winkelgrade beträgt. Zwischen der obenliegenden Spannfläche (105) und der Innenfläche (109) ist eine Aufschiebekeilfläche (107) als Fase angeordnet. Ihr Kegelwinkel beträgt 90 Winkelgrade. Im äußeren Bereich geht die Aufliegefläche (106) in die Spannringkeilfläche (111) mittels der Spannringrückhubfläche (112) über. Letztere hat einen Keilwinkel von 105 Winkelgraden.

Unter Vernachlässigung der Kantenabrundungen hat die Hüllspannfläche (108) eine Fasenlänge von z.B. 2,2 mm, die Aufschiebekeilfläche (107) von z.B. 2,8 mm und die Spannringrückhubfläche (112) von z.B. 2,5 mm. Die wirksame Breite der Spannringkeilfläche (111) hat unter Berücksichtigung der Kantenabrundungen und Fasen eine wirksame Breite von 2,9 mm.

Wie die Figuren 8 und 9 zeigen, sitzt jeweils zwischen zwei Spannelementen (101) formschlüssig ein Elastomerkörper (121). Dazu hat das einzelne Spannelement (101) im Bereich seiner planen Stirnseite, vgl. Figur 10, eine Hintergriffsausnehmung (115), in die ein stirnseitiger Klemmzapfen (122) des benachbarten Elastomerkörpers (121) eingreift.

Die Hintergriffsausnehmung (115) ist teilweise eine Bohrung (116). Sie hat einen Durchmesser von 3 mm und ist von der nächstgelegenen Stirnseite des Spannelements (101) z.B. 2,3 mm entfernt. Ihre Mittellinie ist parallel zur Mittellinie (9). Die Mittellinien der Bohrungen (116) liegen 3 mm entfernt von der Innenfläche (109). Zwischen der Bohrung (116) und der Stirnseite ist zur Ausbildung von zwei Hintergriffen (117) eine z.B. 2 mm breite Öffnung vorgesehen. Der jeweilige Klemmzapfen (122) des Elastomerkörpers (121) hat eine zur Hintergriffsausnehmung (115) komplementäre Geometrieform. Der Durchmesser des einzelnen Klemmzapfens (122) ist geringfügig größer als der der Bohrung (116), um nach der Montage die sechs Teile des Spannrings (100) sicher zusammenzuhalten.

Im Innenraum der Spannvorrichtung (10) sitzt der um z.B. 5,5 mm verschiebbare Ringkolben (40). Letzterer hat einen Außendurchmesser von 70 mm und eine Kolbenbreite von 21,5 mm. Der Ringkolben (40) hat eine zentrale Kolbenbohrung (51) mit einem minimalen Innendurchmesser von 33 mm. Die Ringkolbenfrontseite (41) ist passend zum Boden der Flanschplatte (13) im äußeren Bereich angefasst. Im planen Ringkolbenboden (45) befinden sich zwölf Federführungsbohrungen (46), die gegenüber den Sacklochbohrungen (34) des Gehäusedeckels (31) angeordnet sind. In der Außenwandung (47) des Ringkolbens (40) befinden sich zwei Dichtringnuten zur Aufnahme von Dichtringen.

Die Kolbenbohrung (51) ist in drei Bereiche aufgeteilt. Der vordere obere Bereich ist die obere Dichtzone (52), in der in einer Dichtringnut (53) ein Dichtring (54) angeordnet ist. Der Dichtring (54) liegt an der Außenwandung des Stützrohrs (16) an. Der hintere untere Bereich ist die untere Dichtzone (55), in der sich ebenfalls in einer Dichtringnut (56) ein Dichtring (57) befindet. Der untere Dichtring (57) kontaktiert die Außenwandung des Anschlagrohrs (32) des Gehäusedeckels (31). Alle Dichtringe sind beispielsweise Quadringe.

Im mittleren, zwischen den beiden Dichtzonen (52, 55) gelegenen Bereich der Kolbenbohrung (51) befindet sich eine Ringnut (61), die aus einem Arbeitsabschnitt (62) und einem Eintauchabschnitt (65) besteht. Der Arbeitsabschnitt (62) weist eine kegelstumpfmantelförmige Ringnutkeilfläche (63) auf, an der sich beim Spannen des Kombibolzens (130) der Spannring (100) in Radialrichtung abstützt. Die Ringnutkeilfläche (63) hat einen Kegelwinkel von 12 Winkelgraden. Sie erstreckt sich in der Ringnut (61) auf einer Länge von z.B. 4 mm.

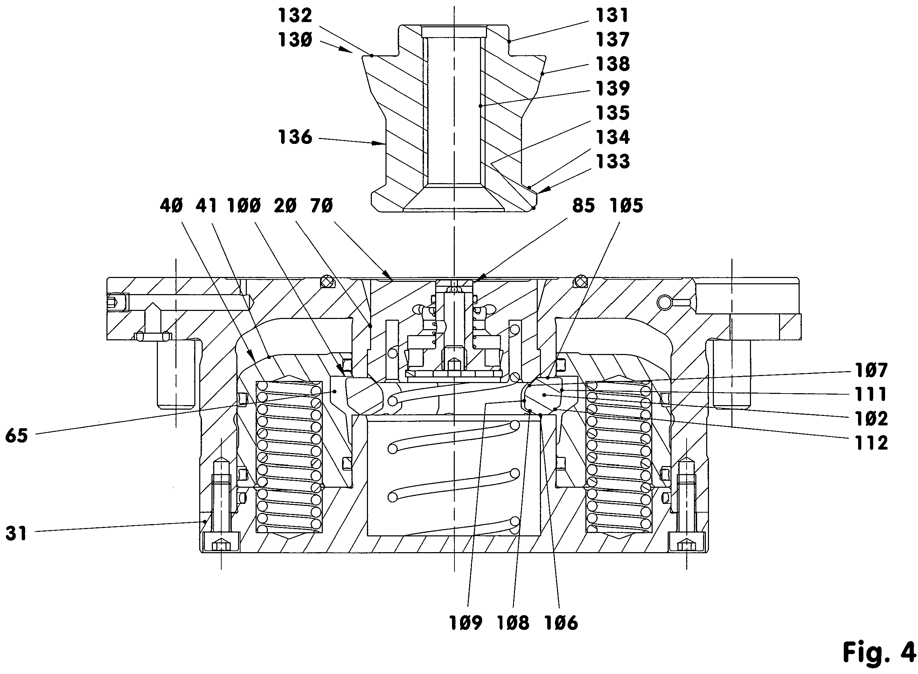

Nach Figur 4 schließt sich an ihrem oberen Ende der Eintauchabschnitt (65) an. Letzterer hat einen zylindrischen Nutgrund, dessen Nuttiefe z.B. 3,5 mm beträgt. Die untere kegelstumpfmantelförmige Flanke des Eintauchabschnitts bildet eine Rückhubfläche (66), deren Kegelwinkel 105 Winkelgrade misst. Der Eintauchabschnitt (65) nimmt den Spannring (100) komplett auf, wenn die Verschlusskappe (70) auf der Fahrt in die Verschlusskappenausnehmung (33) des Gehäusedeckels (31) den Spannring (100) - unter dessen Aufweitung - passiert. Der Übergang zwischen der Ringnutkeilfläche (63) und der Rückhubfläche (66) ist abgerundet.

Selbstverständlich kann die Außenwandung (47) des Ringkolbens (40) eine ovale, eine elliptische, eine polygonale oder eine vieleckige Kontur haben. Das gleiche gilt für die Kontur der Innenwandung (48).

Die Verschlusskappe (70) ist ein im Wesentlichen rotationssymmetrisches, kolbenartiges Bauteil, das bei nicht genutzter Spannvorrichtung (10) die Aufnahmeausnehmung (20) verschließt, vgl. Figuren 1 bis 4. Sie ist ebenfalls aus dem rostfreien Stahl X90CrMoV18 hergestellt. Ihre Stirnseite ist bis auf einen 0,9 mm breiten Rand um 0,3 mm eingezogen. Die Verschlusskappe (70) hat eine zylindrische Außenwandung, die im unteren Bereich einen Wellenbund (71) aufweist, mit dem sie in der Geschlossenstellung am Hintergriffsabsatz (23) der Aufnahmeausnehmung (20) anliegt. Zentral wird sie von einer Stufenbohrung (72) durchdrungen, die sich in mehreren Stufen zur vorderen Stirnseite hin verjüngt.

Nach Figur 4 ist der untere Bereich der Stufenbohrung (72) ein Zylinderbereich (73), der einen Durchmesser von 15 mm hat. In der Wandung des Zylinderbereichs (73) befinden sich eine Ringnut für einen Sicherungsring und mindestens zwei Überströmkerben (74). An den Zylinderbereich (73) schließt sich ein Luftverteilbereich (75) an, von dem aus sich z.B. acht Freiblasbohrungen (76) zur radialen Außenwandung der Verschlusskappe (70) erstrecken. Die Freiblasbohrungen (76) liegen alle in einer Ebene. Sie enden tangential im Luftverteilbereich (75), wobei ihre Mittellinien einen zur Mittellinie (9) zentrischen Kreis mit z.B. 10,4 mm Durchmesser tangieren. Durch diese Anordnung der Freiblasbohrungen (76) entsteht beim Freiblasen in dem sich nach oben aufweitenden Zentrierspalt (22) eine sich schraubenförmig windende Freiblasströmung. Auf den Luftverteilbereich (75) folgt eine Führungsbohrung (77), deren Durchmesser 6 mm misst.

Zwischen der Außenwandung der Verschlusskappe (70) und der Stufenbohrung (72) ist in der unteren Hälfte der Verschlusskappe (70) eine Federführungsringnut (81) eingearbeitet. In Letzterer sitzt eine z.B. fünf Windungen aufweisende Schließfeder (82) in Form einer Schraubendruckfeder, die sich am Boden der Verschlusskappenausnehmung (33) des Gehäusedeckels (31) abstützt.

Die untere Stirnfläche der Verschlusskappe (70) weist als Spreizfase (78) eine 1,4 x 45°-Fase nach DIN 406-11 auf. Das Führungsspiel der Verschlusskappe (70) in der Aufnahmeausnehmung (20) ist kleiner als 0,1 mm.

In der Stufenbohrung (72) sitzt, durch einen Sicherungsring axial gesichert, vgl. Figur 11, ein Reinigungskolben (85). Sein im Zylinderbereich (73) gelagerter Kolben ist mit seiner Kolbenstange (86) abgedichtet in der Führungsbohrung (77) geführt. Die Kolbenstange (86) hat eine Durchgangsbohrung (87), die im Kolbenbereich z.B. mittels eines Gewindestifts verschlossen ist. In der freien Stirnfläche der Kolbenstange (86) befindet sich eine axial ausblasende Düsenbohrung (89). Beispielsweise 1 mm unterhalb der freien Stirnfläche befinden sich z.B. acht weitere, jedoch radial ausblasende Düsenbohrungen (89), vgl. auch Figur 12. Im Luftverteilbereich (75) hat die Kolbenstange (86) mindestens eine Radialbohrung (88), über die die Durchgangsbohrungen (87) mit Druckluft versorgt werden.

In den Figuren 1 bis 4 ist jeweils oberhalb der Spannvorrichtung (10) der noch nicht in die Aufnahmeausnehmung (20) versenkte Kombibolzen (130) dargestellt. Er ist ebenfalls aus dem rostbeständigen Stahl X90CrMoV18 hergestellt und wie die Spannelemente (101) auf 56 + 3 HRC gehärtet. Der Kombibolzen (130) hat die Aufgabe, das Werkstück an der Spannvorrichtung (10) zu spannen und zugleich in dieser präzise zu zentrieren. Er ist ein z.B. 30 mm langes Drehteil, das eine zentrale Durchgangsbohrung (139) mit einem M10-Gewinde aufweist. Die Durchgangsbohrung (139) hat werkstückseitig eine 3 mm tiefe Passsenkung mit einem Durchmesser von z.B. 10,5 mm. An ihrem gegenüberliegenden Ende weist sie eine 90°-Senkung auf.

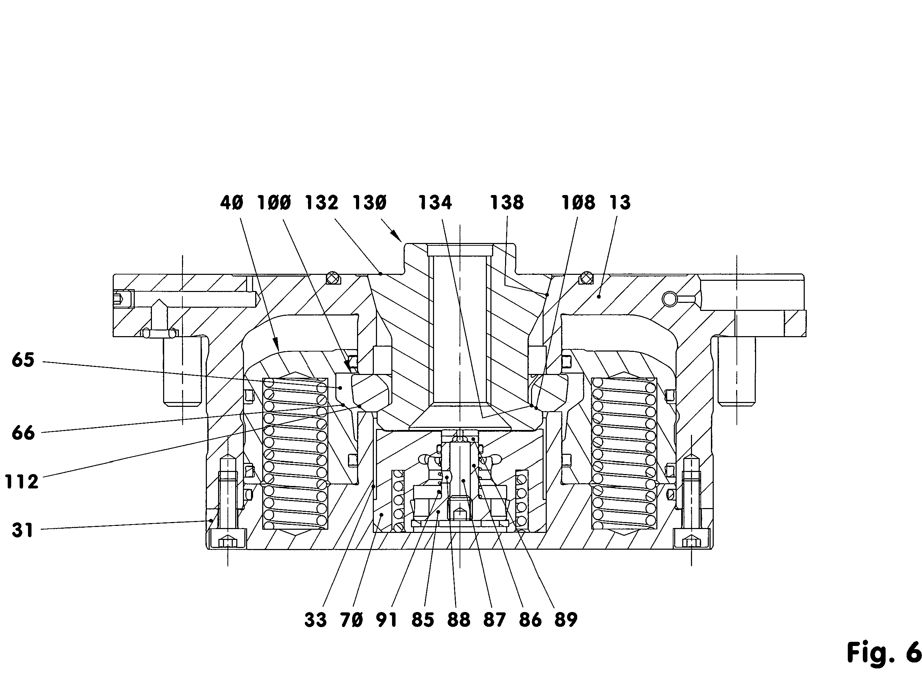

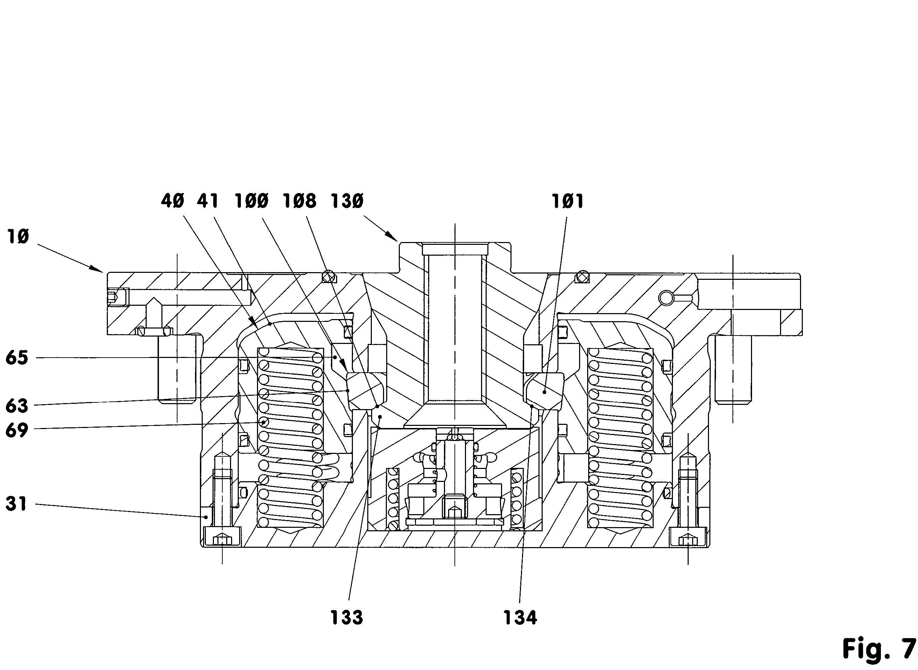

Am werkstückseitigen Ende ist der Kombibolzen (130) mit einem Passzylinderabschnitt (131) ausgestattet, dessen Durchmesser z.B. 18 mm und dessen Höhe z.B. 5 mm misst. Er endet in einer planen Axialanlagefläche (132). Der Teil des Kombibolzens (130), der nach den Figuren 6 und 7 vollständig in die Aufnahmeausnehmung (20) eintaucht, besteht im Wesentlichen aus drei Bereichen. Der vordere Bereich ist der Spannbereich (133) und der hintere Bereich ist der Zentrierbereich (137). Zwischen diesen beiden Bereichen liegt der Taillenbereich (136). Der Spannbereich (133), der in einem z.B. 1,5 mm breiten zylindrischen Abschnitt einen Durchmesser von z.B. 26,8 mm hat, dient beim Spannen des Werkstücks u.a. als Hintergriff, der am Spannring (100) zur Anlage kommt. Er hat dazu eine kegelstumpfmantelförmige Innenspannfläche (134), mit der er im gespannten Zustand großflächig an der Hüllspannfläche (108) des Spannrings (100) anliegt. Die wirksame Flankenlänge der Innenspannfläche (134) beträgt unter Berücksichtigung der Ab- und Ausrundungen mindestens 2,4 mm.

Zwischen dem zylindrischen Abschnitt und der vorderen Stirnseite des Spannbereichs (133) befindet sich eine Spannringrückhubfase (135), deren Kegelwinkel 90 Winkelgrade beträgt. Sie erleichtert beim Einfahren des Kombibolzens (130) in die Aufnahmeausnehmung (20) das Passieren des aufgedehnten Spannrings (100).

Der Zentrierbereich (137) des Kombibolzens (130) hat eine der Innenspannfläche (134) zugewandte feinbearbeitete Außenspannfläche (138), die zur Zentrierung an der Zentrierspannfläche (21) der Aufnahmeausnehmung (20) - nach den Figuren 6 und 7 - großflächig anliegt. Die wirksame Flankenlänge beträgt unter Berücksichtigung der Ab- und Ausrundungen mindestens 5,4 mm. Der maximale Durchmesser der Außenspannfläche (138) misst z.B. 29,8 mm.

Der Taillenbereich (136) hat einen Durchmesser von z.B. 22 mm. In diesem Bereich befinden sich zwei gegenüberliegende Abflachungen, vgl. Figur 1, um zwei Angriffsflächen für einen Maulschlüssel mit der Schlüsselweite 20 zu haben.

Nach Figur 2 befindet sich die Spannvorrichtung (10) drucklos in ihrem unbetätigten Ausgangszustand. Die Verschlusskappe (70) sitzt in ihrer Schließposition. Zugleich liegt der Ringkolben (40) aufgrund der Wirkung der Schraubendruckfedern (69) am Boden des Zylinders (27) an. Dabei kontaktiert der Spannring (100) die Ringnutkeilfläche (63) des Ringkolbens (40). Der Spannring (100) ragt ca. zur Hälfte in die Aufnahmeausnehmung (20) hinein. Vor der Aufschiebekeilfläche (107) liegt die Verschlusskappe (70) mit ihrer Spreizfase (78) in einem Abstand von ca. 0,1 mm, womit ein Öffnen der Verschlusskappe (70) formschlüssig verhindert wird. Der Reinigungskolben (85) befindet sich in der Verschlusskappe (70) in seiner eingefahrenen Position.

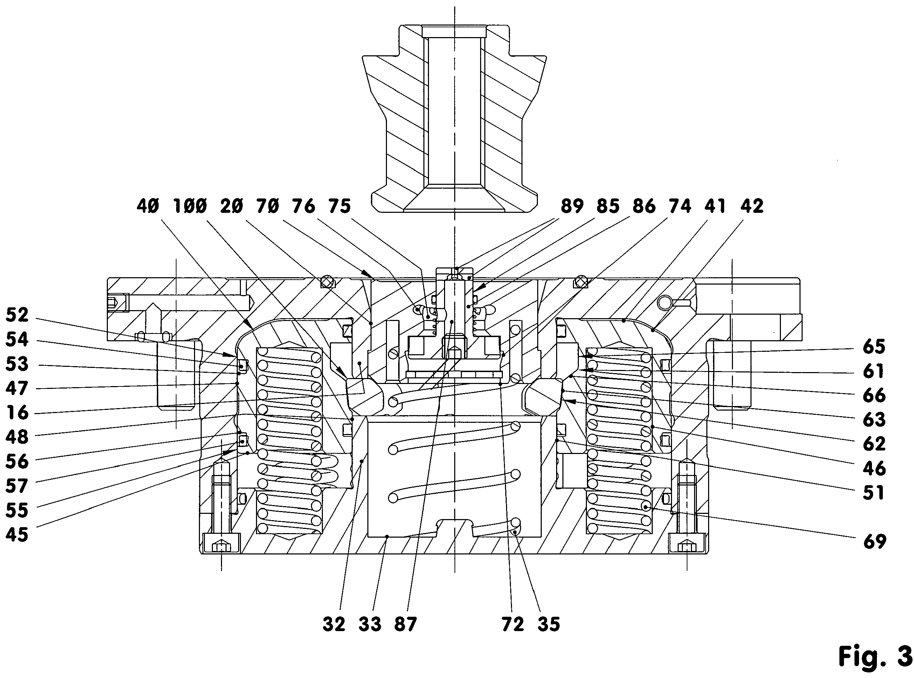

Gemäß Figur 3 steht an dem rückwärtigen Kolbenboden (45) des Ringkolbens (40) der pneumatische Solldruck an. Zugleich gelangt Druckluft über die Querbohrung (35) in die Aufnahmeausnehmung (20). Dort wirkt sie in der Verschlusskappe (70) auf den Reinigungskolben (85), wodurch dieser in der Stufenbohrung (72) nach oben gepresst wird. Dabei strömt über die Überströmkerben (74) die Druckluft über den Luftverteilbereich (75) in die Freiblasbohrungen (76) und über die Durchgangsbohrung (87) der Kolbenstange (86) in die ausgefahrenen Düsenbohrungen (89) zum Freiblasen der Stirnseite der Verschlusskappe (70). Der Spannring (100) und der Ringkolben (40) dichten hierbei den zwischen dem Stützrohr (16) und dem Anschlagrohr (32) liegenden Spalt ab.

Nach Figur 4 liegt an der Ringkolbenfrontseite (41) Druckluft an, um so den Ringkolben (40) unter einem Spannen der Schraubendruckfedern (69) auf dem Gehäusedeckel (31) aufsitzen zu lassen, wodurch der Eintauchabschnitt (65) auf die Höhe des Spannrings (100) gelangt. Des Weiteren wird die Druckluftversorgung der Aufnahmeausnehmung (20) unterbrochen. Der Reinigungskolben (85) fährt - unterstützt von seiner Schließfeder (91) - in die Verschlusskappe (70) wieder ein. Die Aufnahmeausnehmung (20) ist für ein Eintauchen des Kombibolzens (130) vorbereitet.

Gemäß Figur 5 ist der Kombibolzen (130) schon großteils in die Aufnahmeausnehmung (20) unter einem Voranschieben der Verschlusskappe (70) gegen die Wirkung der Schließfeder (82) eingetaucht. Der Spannbereich (133) des Kombibolzens (130) drückt dabei - unter einer Dehnung der Elastomerkörper (121) des Spannrings (100) - den Spannring (100) in den Eintauchabschnitt (65) des Ringkolbens (40). Das Dehnen der Elastomerkörper (121) hat kurz zuvor auch die Verschlusskappe (70) bewirkt.

Nach Figur 6 ist der Kombibolzen (130) mit seiner Außenspannfläche (138) an der Zentrierspannfläche (21) der Flanschplatte (13) vollflächig zur Anlage gekommen. Die axiale Anlagefläche (132) des Kombibolzens (130) liegt nun in der Ebene, in der die dem Werkstück zugewandten Kontaktstellen der Oberseite der Flanschplatte (13) liegen. Der Spannring (100) hat sich in seine Ausgangslage zusammengezogen, womit er zum einen den Eintauchabschnitt (65) des Ringkolbens (40) großteils verlassen hat und zum anderen mit seiner Hüllspannfläche (108) an der Innenspannfläche (134) des Kolbenbolzens (130) anliegt. Die Verschlusskappe (70) steht in geringem Abstand, z.B. 0,1 mm, vor dem Boden der Verschlusskappenausnehmung (33) des Gehäusedeckels (31).

Gemäß Figur 7 wird nach einem Entlüften des vor der Ringkolbenfrontseite (41) gelegenen Zylinderraums der Ringkolben (40) aufgrund der Wirkung der Schraubendruckfedern (69) - nur ggf. mit Druckluftunterstützung - nach oben gedrückt, wodurch die Ringnutkeilfläche (63) hinter den Spannring (100) gelangt, um zum endgültigen Fixieren des Kombibolzens (130) in der Spannvorrichtung (10) dessen Spannelemente (101) gegen die Innenspannfläche (134) des Spannbereichs (133) des Kombibolzens (130) zu pressen. Eine auf den Kombibolzen (130) wirkende Zugkraft wird über den Spannbereich (133) in den Spannring (100) eingeleitet, um von dort über die plane Spannfläche (105) in die Stirnfläche des Anschlagrohrs (32) und somit ins Gehäuse (11) übertragen zu werden.

Hat sich der Spannring (100) noch nicht vollständig an der Innenspannfläche (134) des Spannbereichs (133) des Kombibolzens (130) angelegt, vgl. Figur 6, so werden die noch in den Eintauchabschnitt (65) ragenden Teile (101, 121) mithilfe der kegelstumpfmantelförmigen Rückhubfläche (66) durch Anlage an der Spannringrückhubfläche (112) des Spannrings (100) gegen den Kombibolzen (130) geschoben.

Die Messabweichung von Spannvorgang zu Spannvorgang ist kleiner als 5 µm. Die Einzugskraft liegt hierbei im Bereich von 18 kN.

Das Lösen des Kombibolzens (130) erfolgt im Wesentlichen in umgekehrter Reihenfolge. Der Ringkolben (40) wird mit Druckluft gegen den Gehäusedeckel (31) gepresst, wodurch der Spannring (100) beim Herausziehen des Kolbenbolzens (130) in den Eintauchabschnitt (65) des Ringkolbens (40) verdrängt wird. Die kegelstumpfmantelförmige Hüllspannfläche (108) des Kombibolzens (130) erleichtert diesen Vorgang.

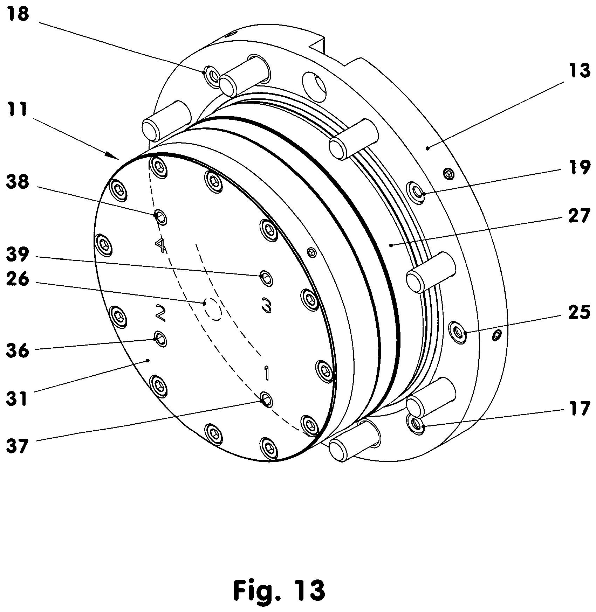

Die Figur 13 zeigt die Rückseite der Spannvorrichtung (10). Die Druckluft kann bei diesem Spannsystem (1) in zwei verschiedenen Gehäusebereichen in die Spannvorrichtung (10) eingeleitet werden. Der übliche Gehäusebereich ist die Unterseite des Gehäusedeckels (31), an der z.B. vier Anschlüsse für Druckluftschläuche vorgesehen sind. An der Unterseite befindet sich im Bereich der Nummerierung "1" ein Entriegelungsdruckluftanschluss (37). Über diesen Anschluss wird die Druckluft im Gehäuse (11) vor die Ringkolbenfrontseite (41) gefördert. Im Bereich der Nummerierung "3" ein Sperrluftanschluss (39). Über ihn gelangt beispielsweise radial durch den Ringkolben (40) hindurch die Druckluft in den Eintauchabschnitt (65), um von dort entlang dem Spannring (100) zwischen dem Stützrohr (16) und dem Anschlagrohr (32) in die Aufnahmeausnehmung (20) einzuströmen. Neben der Nummerierung "2" befindet sich ein Spanndruckluftanschluss (36), über den der Ringkolbenboden (45) mit Druckluft beaufschlagt werden kann, um die Spannbewegung des Ringkolbens (40) zu unterstützen. Der Ausblasanschluss (38) wird nur verwendet, wenn die Spannvorrichtung (10) nicht mit einer Verschlusskappe (70) ausgestattet ist. Dann wird vom Boden der Verschlusskappenausnehmung (33) aus Druckluft in Richtung der Aufnahmeausnehmung (20) geblasen, um dort sich befindende Schmutzpartikel ins Freie zu fördern.

Zum schlauchlosen Anschluss der Druckluft sind auf der Rückseite des Flansches bzw. der Flanschplatte (13) fünf Anschlüsse (17, 18, 19, 26, 25) vorgesehen. Diese Anschlüsse werden aus Bohrungen versorgt, die sich im Träger der Spannvorrichtung (10) befinden. Die Anschlüsse sind der Entriegelungsdruckluftanschluss (17), der Ausblasanschluss (18), der Sperrluftanschluss (19), der Spanndruckluftanschluss (26) und ein Auflagenkontrollanschluss (25), vgl. hierzu Figur 2.

Bei diesem Spannsystem (1) kommen die in der Spannvorrichtung (10) angeordneten Spannelemente (101) am Kombibolzen (130) mit ihren Spannflächen (105, 108) vollflächig zur Anlage. Dadurch ergeben sich auch bei hohen Einzugskräften verhältnismäßig niedrige Flächenpressungen. Die großen Kontaktflächen garantieren eine hohe Formsteifigkeit des Gesamtsystems, womit die Spannvorrichtung (10) über den Kombibolzen (130) auch große Lastmomente problemlos abstützen kann.

Die Spannelemente (101), die Teile eines über Elastomerkörper (121) zusammenmontierten Spannrings (100) sind, bilden mit einem Ringkolben (40) zusammen ein Keilgetriebe, bei dem der axiale Hub des Ringkolbens (40) radiale, auf den Spannring (100) wirkende Spannkräfte erzeugt. Über die Elastomerkörper (121) des Spannrings (100) sind die segmentartigen Spannelemente (101) in Umfangsrichtung elastisch gekoppelt. Der Ringkolben (40) wird im Ausführungsbeispiel mittels Federkraft in die Spannstellung der Spannvorrichtung (10) bewegt und dort gehalten. Gegebenenfalls wird der Spannvorgang mithilfe von Druckluft unterstützt. Zum Entlasten des gespannten Spannrings (100) und zum Zurückfahren des Ringkolbens (40) - für die Freigabe des Kombibolzens (130) - wird Druckluft eingesetzt. Zusätzlich wird der Innenraum der Spannvorrichtung (10) unter Sperrluft gesetzt, um während der Werkstückbearbeitung ein Eindringen von Spänen, Kühl- oder Schmiermittel zu verhindern. Gegebenenfalls kann zum Bewegen des Ringkolbens (40) auch ein Hydrauliköl benutzt werden.

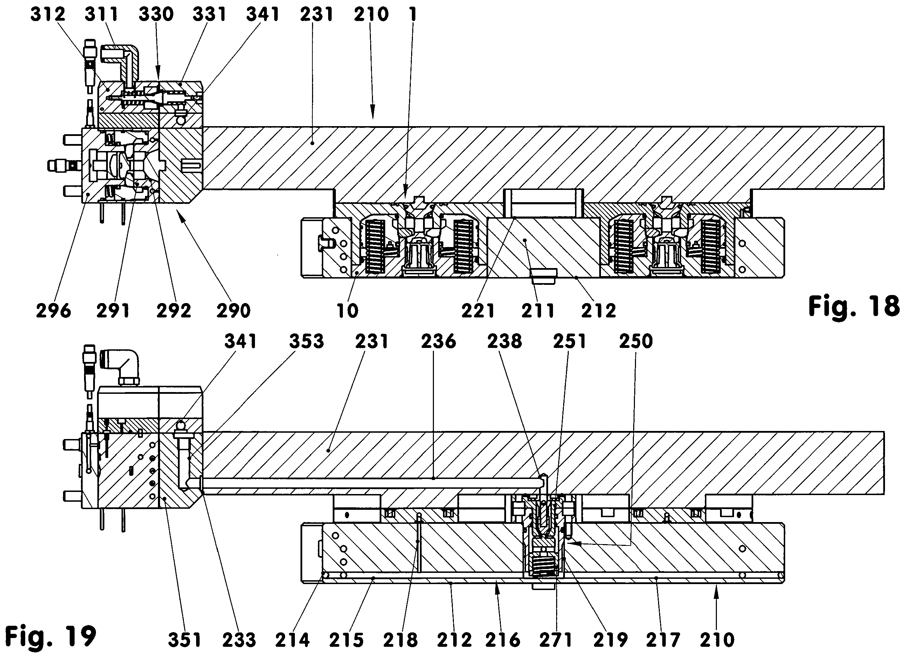

In der Figur 18 ist ein Querschnitt des Werkstück-Aufspannsystems (210) durch die Spannvorrichtungen (10) dargestellt. Die Werkstück-Aufspannplatte (231) und die Aufsetzplatte (211) sind mittels der Spannsysteme (1) miteinander verbunden. Hierbei sind die Kombibolzen (130) an der Unterseite der Werkstück-Aufspannplatte (231) angeordnet und ragen nach unten aus dieser heraus. Die Spannvorrichtungen (10) sitzen in der Aufsetzplatte (211). Die Verschlusskappen (70) zeigen nach oben.

An der linken Seite dieser Darstellung ist an der Werkstück-Aufspannplatte (231) die Adapterkupplung (290) angeordnet. Die Adapterkupplung (290) hat roboterseitig mindestens eine Verriegelungsvorrichtung (291) und mindestens ein erstes Energieübergabekupplungsteil (312). Hierbei liegt das Energieübergabekupplungsteil (312) oberhalb der Verriegelungsvorrichtung (291). Es hat roboterseitig einen Energiezuführanschluss (311).

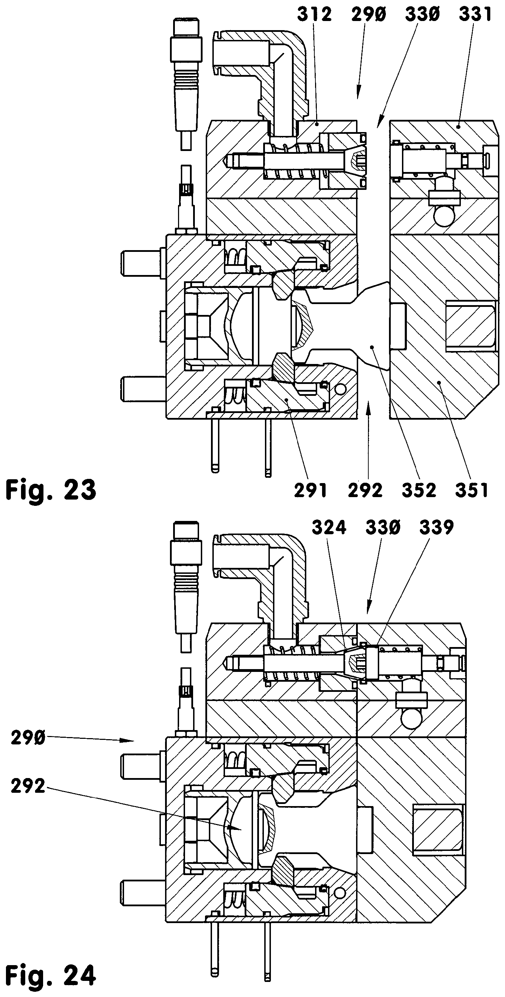

Auf der Seite des Werkstück-Aufspannsystems (210) hat die Adapterkupplung (290) mindestens ein zweites Energieübergabekupplungsteil (331) und einen Andockklotz (351) mit mindestens einem Verriegelungsbolzen (352), vgl. Figur 23. Hierbei ist das zweite Energieübergabekupplungsteil (331) oberhalb des Andockklotzes (351) angeordnet.

Die aus der Verriegelungsvorrichtung (291) und dem Verriegelungsbolzen (352) aufgebaute Andockkupplung (292) ist beispielsweise ähnlich aufgebaut wie das im Zusammenhang mit den Figuren 1 - 13 beschriebene Spannsystem (1). Im dargestellten Ausführungsbeispiel ist die Andockkupplung (292) z.B. ohne Verschlusskappe dargestellt.

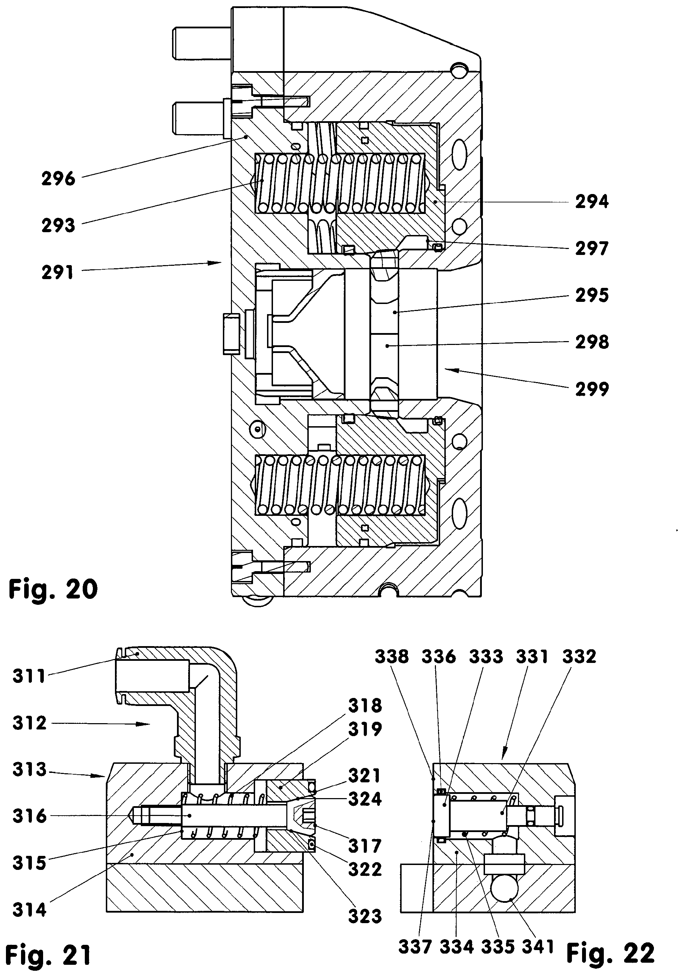

In der Figur 20 ist eine Schnittdarstellung der Verriegelungsvorrichtung (291) dargestellt. Sie hat einen mittels Druckfedern (293) belasteten Sperrkolben (294), an dem ein Sperrring (295) anliegt. Der Sperrkolben (294) ist z.B. pneumatisch gegen die Druckfedern (293) belastbar, sodass der Sperrkolben (294) in dieser Darstellung relativ zum Verriegelungsgehäuse (296) nach links verfahren wird. Damit gelangt eine Sperrkerbe (297) des Sperrkolbens (294) in den Bereich des Sperrrings (295). Der Sperrring (295), dessen Aufbau dem Aufbau des Spannrings (100) entspricht, dehnt sich unter Entlastung der Elastomerkörper (298) in die Sperrkerbe (297) aus. Die Verriegelungsvorrichtung (291) wird zur Aufnahme des Verriegelungsbolzens (352) oder zur Entnahme des Verriegelungsbolzens (352) freigegeben. Im Ausführungsbeispiel hat die Adapterkupplung (290) zwei Andockkupplungen (292), die jeweils eine Verriegelungsvorrichtung (291) und einen Verriegelungsbolzen (352) umfassen.

Die das erste Energieübertragungsteil (312) und das zweite Energieübertragungsteil (331) umfassende Energieübertragungskupplung (330) ist in der Figur 18 im gekuppelten Zustand dargestellt. Die Figur 21 zeigt das erste Energieübertragungsteil (312) und die Figur 22 das zweite Energieübertragungsteil (331) beispielsweise einer pneumatischen Energieübertragungskupplung (330). Im Ausführungsbeispiel hat die Vorrichtung zwei Energieübertragungskupplungen (330).

Das roboterseitige Energieführungsteil (313) hat ein Leitungsgehäuse (314), an dessen Oberseite der Energiezuführanschluss (311) angeordnet ist. Das Leitungsgehäuse (314) hat eine Stufenausnehmung (315), in der ein Zentralbolzen (316) befestigt ist. Dieser Zentralbolzen (316) ist beispielsweise eine Senkschraube, deren Kopf (317) einen gedachten Kegelwinkel von 30 Grad hat. In der Stufenausnehmung (315) stützt sich ein im Folgenden als Verschlussfeder (318) bezeichneter Federenergiespeicher (318) ab, der einen den Zentralbolzen (316) umgreifenden Verschlussschieber (319) belastet. Die Verschlussfeder (318) ist in diesem Ausführungsbeispiel als Druckfeder (318) ausgebildet. Der Verschlussschieber (319) trägt an seiner freien Stirnseite (321) einen Axialdichtring (322). Weiterhin kann an der Mantelfläche des Verschlussschiebers (319) ein Radialdichtelement angeordnet sein. Der Verschlussschieber (319) hat eine Kegelausnehmung (323), deren Steigung dem Kegelwinkel des Zentralbolzens (316) entspricht. In dem in der Figur 21 dargestellten entlasteten Zustand ist die Stirnseite (321) des Verschlussschiebers (319) z.B. bündig mit dem Zentralbolzen (316). Der in der Figuren 18 und 24 erkennbare spaltförmige Verschlusskanal (324) zwischen den beiden Bauteilen ist verschlossen.

Das zweite Energieübergabekupplungsteil (331) hat einen federbelasteten Verschlussstößel (332) mit einem Zylinderkopf (333). Dieser Verschlussstößel (332) ist in einem Ventilgehäuse (334) verschiebbar geführt. Der den Zylinderkopf (333) belastende Federenergiespeicher (335) in der Bauform einer Druckfeder (335) stützt sich am Ventilgehäuse (334) ab. Diese Druckfeder (335) hat beispielsweise eine höhere Federkonstante als die Verschlussfeder (318) des ersten Energieübergabekupplungsteils (312). Bei ungekuppelter Energieübergabekupplung (330) sitzt der Zylinderkopf (333) in einem Dichtring (336) des Ventilgehäuses (334). Die Stirnfläche (337) des Verschlussstößels (332) ist beispielsweise bündig mit der Stirnfläche (338) des Ventilgehäuses (334). Das Ventilgehäuse (334) ist damit verschlossen.

In den Figuren 23 und 24 ist das Kuppeln der Adapterkupplung (290) dargestellt. Bei der Annäherung der beiden Kupplungsteile greifen zunächst die Verriegelungsbolzen (352) der Andockkupplung (292) in die Verriegelungsausnehmungen (299) der Verriegelungsvorrichtungen (291) ein. Hierbei werden die beiden Kupplungspartner gegenseitig zentriert. Bei weiterer Annäherung passiert der Verriegelungsbolzen (352) den Sperrring (295). Der Zentralbolzen (316) der Energieübergabekupplung (330) trifft auf den Verschlussstößel (332). Gleichzeitig trifft das Ventilgehäuse (334) auf den Verschlussschieber (319). Bei weiterer Annäherung verschiebt der Zentralbolzen (316) den Verschlussstößel (332) gegen die Belastung der Druckfeder (335). Der Verschlussschieber (319) wird gegen die Belastung der roboterseitigen Verschlussfeder (318) verschoben. Hierbei wird zunächst der roboterseitige Verschlusskanal (324) geöffnet, sodass Luft ausströmt. Der aufspannplattenseitige Leitungskanal (339) ist weiterhin mittels des Verschlussstößels (332) und des Dichtrings (336) verschlossen. Hiermit kann der Kupplungsbereich gereinigt werden.

Nach dem Freiblasen wird beim weiteren Annähern der Verschlussstößel (332) aus dem Bereich des Dichtrings (336) herausgeschoben. Der Leitungskanal (339) wird freigegeben. Sobald sich das Ventilgehäuse (334) an den Verschlussschieber (319) angelegt hat, ist die Energieübergabekupplung (330) gegen die Umgebung (201) abgedichtet. Gleichzeitig ist die Andockkupplung (292) verrastet. Beispielsweise strömt die mittels des Industrieroboters (208) bereitgestellte Druckluft durch den Energiezuführungsanschluss (311), die Energieübergabekupplung (330) und durch Kanäle (341, 353) im zweiten Energieführungskupplungsteil (331) und im Andockklotz (352) in die Werkstück-Aufspannplatte (231).

Die Figur 19 zeigt einen Querschnitt des Werkstück-Aufspannsystems (210). Die Schnittebene dieser Darstellung ist parallel zu der Schnittebene der Darstellung der Figur 18. Beispielsweise ist die Schnittebene in Richtung der vertikalen Mittenquerebene des Werkstück-Aufspannsystems (210) um eine halbe Teilung der Spanneinheiten (1) versetzt zu der Schnittebene der Figur 18.

In der Werkstück-Aufspannplatte (231) ist ein Energiezuführungskanal (236) eingeprägt. Dieser verläuft z.B. parallel zur Unterseite (237) der Werkstück-Aufspannplatte (231) und endet in einen vertikal ausgerichteten Anschlusskanal (238). Hier mündet der Energiezuführungskanal (236) in eine Medienkupplung (250). Diese Medienkupplung (250) verbindet in dieser Darstellung die Werkstück-Aufspannplatte (231) mit der Aufsetzplatte (211), sodass das in der Werkstück-Aufspannplatte (231) zugeführte Medium in einen Medienkanal (215) in der Aufsetzplatte (211) geleitet wird. Der Medienkanal (215) ist Teil eines in der Aufsetzplatte (211) eingeprägten Kanalsystems (216). Dieses Kanalsystem (216) besteht aus mehreren horizontalen Kanälen (217) und vertikalen Kanälen (218), die die Medienkupplung (250) mit den Spannvorrichtungen (10) verbinden.

Im Ausführungsbeispiel hat das Werkstück-Aufspannsystem (210) zwei Medienkupplungen (250). Diese Medienkupplungen (250) sind beispielsweise in der vertikalen Mittenlängsebene des Werkstück-Aufspannsystems (210) symmetrisch zu seiner vertikalen Mittenquerebene angeordnet. Sie sind z.B. zueinander identisch ausgebildet. Die Kanalsysteme (216) beider Medienkupplungen (250) können getrennt voneinander geführt sein. Hierbei können die einzelnen Kanäle nebeneinander oder übereinander angeordnet sein. Die Kanäle können sich kreuzen. Es ist aber auch denkbar, dass einzelne Kanäle sich schneiden. Hierbei können die Kanalsysteme (216) beider Medienkupplungen zusammengeführt sein. Über die einzelne Medienkupplung (250) können beispielsweise die gleichen Energien, Daten und Signale übertragen werden wie über die einzelne Energieübergabekupplung (330). Beispielsweise bei Zuführung eines flüssigen oder gasförmigen Mediums ist die Aufsetzplatte (211) in der Strömungsrichtung der Werkstück-Aufspannplatte (231) nachgeschaltet.

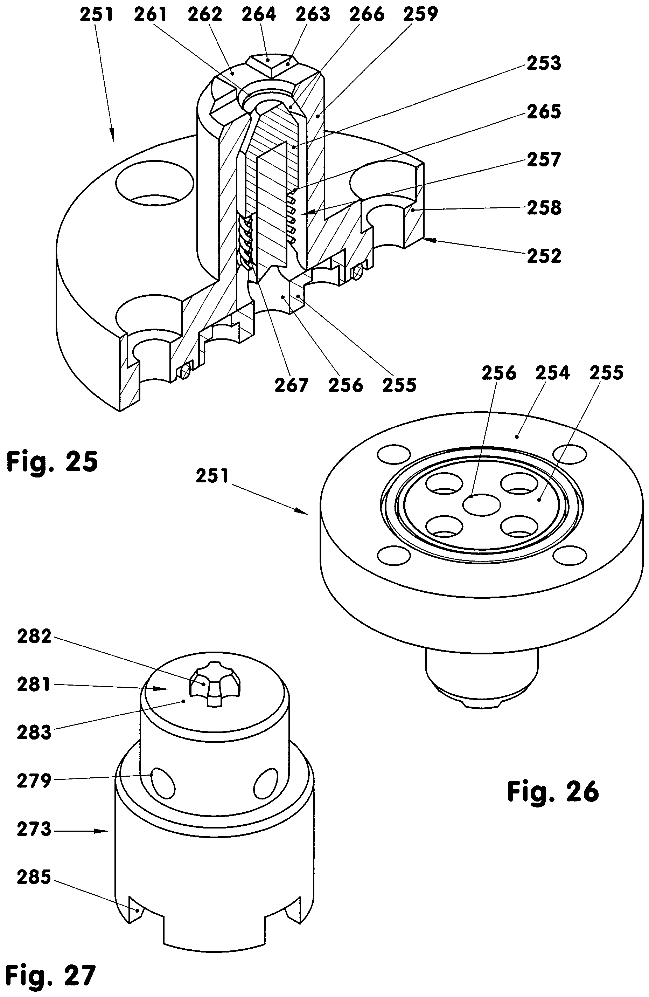

Die einzelne Medienkupplung (250) hat ein an der Werkstück-Aufspannplatte (231) angeordnetes erstes Medienkupplungsteil (251) und ein an der Aufsetzplatte (211) angeordnetes zweites Medienkupplungsteil (271). Das erste Medienkupplungsteil (251) ist im Ausführungsbeispiel als Bolzenteil (251) ausgebildet. Das Bolzenteil (251), vgl. die Figuren 25 und 26, hat ein Festteil (252) und einen relativ hierzu federbelastet verschiebbaren Ventilschieber (253). Das Festteil (252) hat an seiner Oberseite (254) einen Einsatzdeckel (255) mit einem zentralen Durchbruch (256). Dieser Durchbruch (256) verbindet im montierten Zustand den Energiezuführungskanal (236) mit dem Leitungsraum (257) des Bolzenteils (251). Mit einem Befestigungsbund (258) ist das Festteil (252) an der Werkstück-Aufspannplatte (231) z.B. angeschraubt. Das Festteil (252) ragt mit einem rohrförmigen, zentralen Zapfen (259) aus dem Befestigungsbund (258) heraus. An der Stirnseite des Zapfens (259) hat dieser eine zentrale Bohrung (261) und z.B. vier Radialkanäle (262). Zwischen den Radialkanälen (262) stehen Anschlagstege (263). Die Anschlagflächen (264) der Anschlagstege (263) sind beispielsweise normal zur Höhenrichtung (207) der Medienkupplung (250) angeordnet. Die Innenwandung des Zapfens (259) ist in dem an die freie Stirnseite angrenzenden Bereich hohlkegelstumpfförmig ausgebildet. Der in Richtung des Leitungsraums (257) geöffnete Kegelwinkel beträgt beispielsweise 60 Grad.

Der Ventilschieber (253) hat eine Federaufnahme (265) und ist in seinem oberen Bereich komplementär zum hohlkegelstumpfförmigen Bereich des Zapfens (259) ausgebildet. Zwischen dem Ventilschieber (253) und dem Zapfen (259) ist in den Darstellungen der Figuren 19 und 25 ein Luftkanal (266) dargestellt. An der Federaufnahme (265) liegt ein Federenergiespeicher (267) in der Bauform einer Druckfeder (267) an. Diese stützt sich am Einsatzdeckel (255) ab. Die Druckfeder (267) belastet den Ventilschieber (253) in Richtung der Stirnseite des Zapfens (259), sodass bei entlasteter Druckfeder (267) der Luftkanal (266) verschlossen ist.

Im Bolzenteil (251) und/oder in der Werkstück-Aufspannplatte (231) kann eine Leckageüberwachung vorgesehen sein. Diese umfasst beispielsweise ein Druckschalter, der bei Unterschreiten eines Druck-Schwellenwerts einen Alarm auslöst.

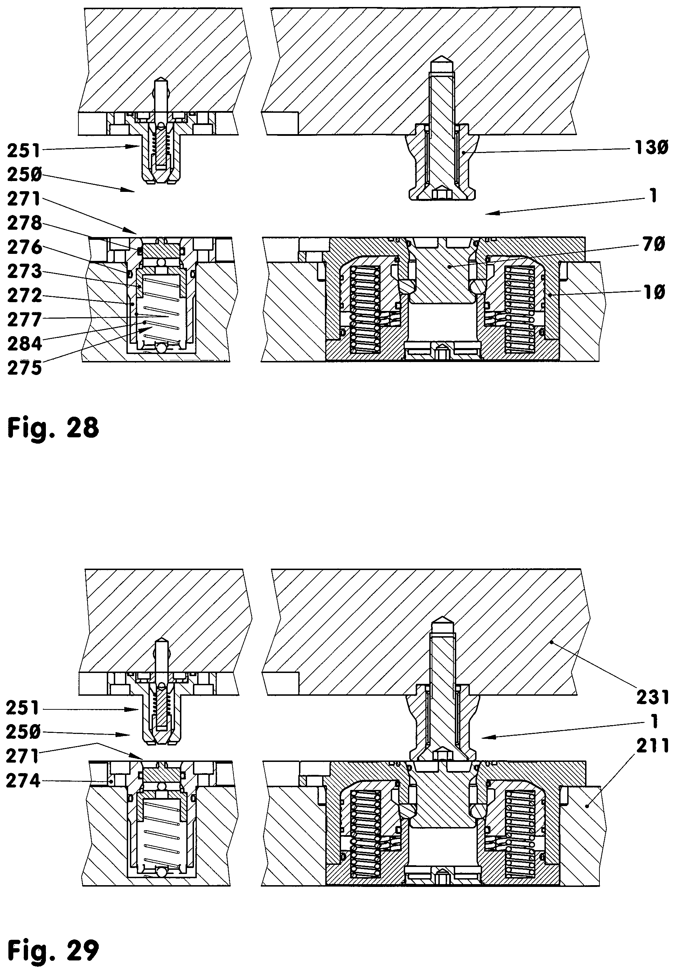

Das zweite Medienkupplungsteil (271), vgl. die Figuren 27 und 28, ist im Ausführungsbeispiel ein Aufnahmeteil (271). Das Aufnahmeteil (271) hat ein in der Aufsetzplatte (211) befestigtes Aufnahmegehäuse (272), in dem ein Topfschieber (273) federbelastet in der Höhenrichtung (207) verschiebbar ist. Das Aufnahmegehäuse (272) ragt im montierten Zustand in eine topfförmige Ausnehmung (219) der Aufsetzplatte (211) hinein. Es ist mit einem Auflagebund (274) an der Oberseite (221) der Aufsetzplatte (211) befestigt. Das Aufnahmegehäuse (272) hat einen offenen Boden, sodass der Gehäuseinnenraum (275) in den Medienkanal (215) mündet. In der Ausnehmung (219) ist das Aufnahmegehäuse (272) mittels eines Außendichtrings (276) abgedichtet. Die gestuft ausgebildete Innenwandung (277) des Aufnahmegehäuses (272) hat im verjüngten Bereich einen Innendichtring (278).

Der Topfschieber (273) ist als Einzelteil in der Figur 27 dargestellt. Er hat einen zweistufigen Topfaufbau, wobei der Durchmesser des unteren Bereichs größer ist als der Durchmesser des oberen Bereichs. Der obere Bereich hat radial orientierte Durchbrüche (279). An seiner Oberseite (281) hat der Topfschieber (273) einen zentralen Sternbolzen (282). Dieser Sternbolzen (282) ist von einer Schubfläche (283) umgeben. Der Topfschieber (273) ist auf einer Aufnahmefeder (284) abgestützt. Die Aufnahmefeder (284) ist in diesem Ausführungsbeispiel ein Federenergiespeicher (284) in der Bauform einer Druckfeder. Die Federkonstante dieser Aufnahmefeder (284) ist z.B. höher als die in der Strömungsrichtung vorgeschaltete Federkonstante der Druckfeder (267) des Bolzenteils (251). An seinem unteren Ende hat der Topfschieber (273) radial orientierte Ausnehmungen (285). Bei montiertem Aufnahmeteil (271) liegen diese Ausnehmungen (285) beispielsweise vor den Medienkanälen (215).

Die Figuren 28 - 33 zeigen das Ankuppeln der Werkstück-Aufspannplatte (231) an die Aufsetzplatte (211). In der Darstellung der Figur 28 sind die Werkstück-Aufspannplatte (231) und die Aufsetzplatte (211) voneinander entkoppelt. Der Kombibolzen (130) und das Bolzenteil (251) ragen nach unten. Hierbei ragt in der Darstellung der Figur 28 der Kombibolzen (130) um ein Drittel der Länge des Bolzenteils (251) weiter aus der Werkstück-Aufspannplatte (231) heraus als das Bolzenteil (251). Das Aufnahmeteil (271) und die Spannvorrichtung (10) sind entlastet, vgl. Figur 2. Der Topfschieber (273) steht in seiner höchsten Stellung. Er verschließt das Aufnahmegehäuse (272).

In der Darstellung der Figur 29 kontaktiert der Kombibolzen (130) die Verschlusskappe (70). Das Bolzenteil (251) der Medienkupplung (250) ist weiterhin beabstandet zum Aufnahmeteil (271).

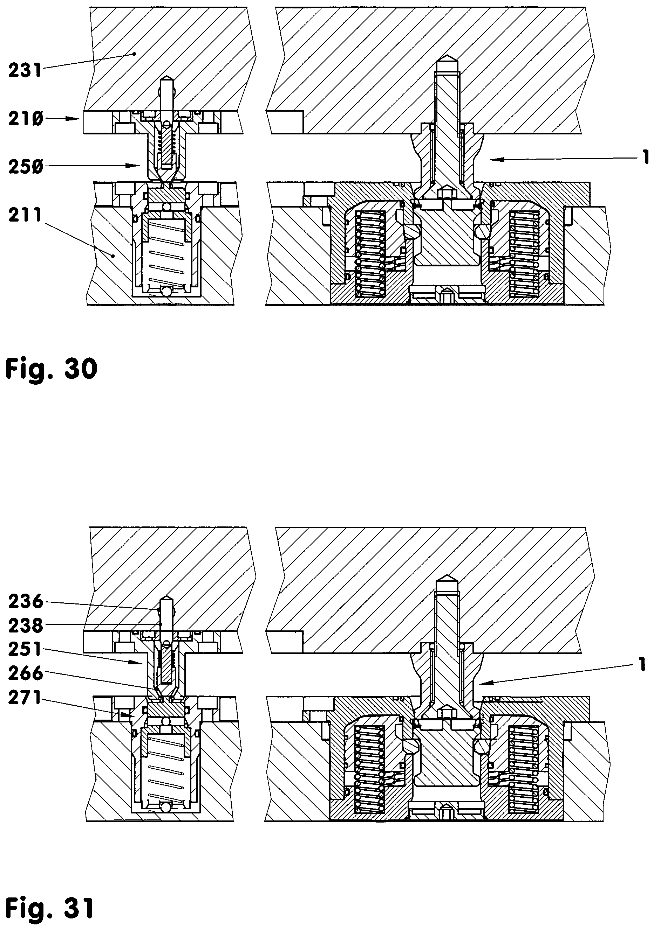

Die Figur 30 zeigt die Aufsetzplatte (211) und die Werkstück-Aufspannplatte (231) bei weiterer Annäherung. Der Ventilschieber (253) der Medienkupplung (250) kontaktiert den Sternbolzen (282) des Aufnahmeteils (271). Im Spannsystem (1) hat der Kombibolzen (130) den Verschlussdeckel (70) weiter nach unten verschoben. Das Spannsystem (1) zentriert die Lage der Werkstück-Aufspannplatte (231) relativ zur Aufsetzplatte (211).

In der Darstellung der Figur 31 liegt der Ventilschieber (253) weiterhin am Topfschieber (273) an, der z.B. unverändert mittels seiner Druckfeder (284) im Aufnahmegehäuse (272) steht. Der Gehäuseinnenraum (275) ist damit weiterhin gegen die Umgebung (1) abgedichtet. Beim weiteren Absenken der Werkstück-Aufspannplatte (231) relativ zur Aufsetzplatte (211) hat sich der Zapfen (259) mit den Anschlagflächen (264) auf die Schubfläche (283) des Topfschiebers (273) aufgelegt. Damit ist der Ventilschieber (253) relativ zum Festteil (252) verschoben, sodass der Luftkanal (266) geöffnet ist. Die z.B. über den Roboterarm (209) geförderte Druckluft wird durch die Energiezuführungskanäle (236) in den Leitungsraum (257) des Bolzenteils (251) geführt. Diese Druckluft durchströmt den Luftkanal (266) und strömt durch die Radialkanäle (262) in die Umgebung (1). Hierbei wird der Bereich der Medienkupplung von Verunreinigungen, z.B. von Spänen, Staub, Feuchtigkeit, etc., gereinigt. In der Spannvorrichtung (10) hat der Kombibolzen (130) den Verschlussdeckel soweit verschoben, dass dieser am Spannring (100) anliegt.

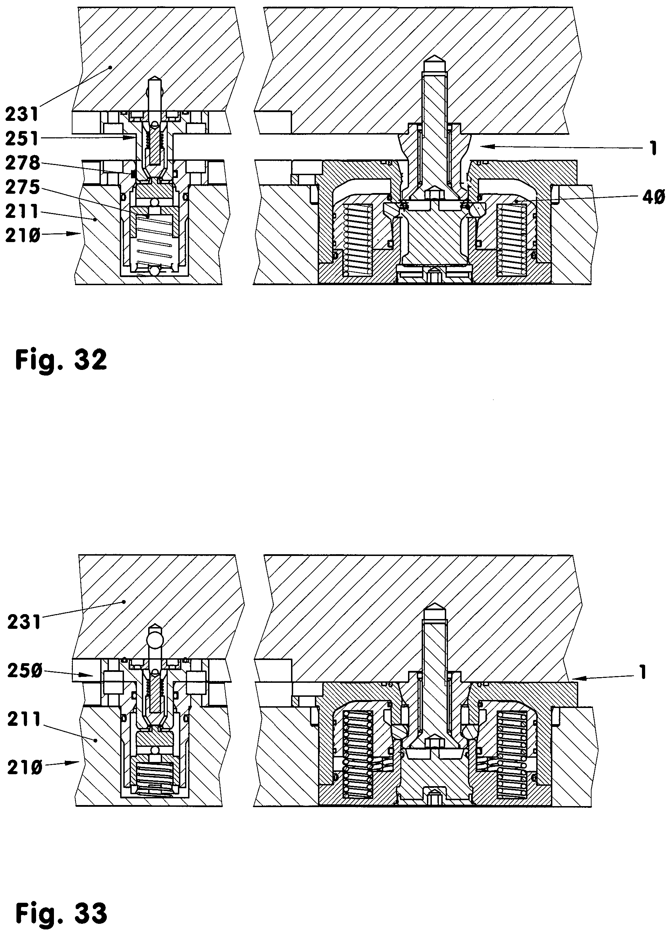

Die Figur 32 zeigt das Werkstück-Aufspannsystem (210) bei weiter angenäherten Teilbaugruppen. Das Bolzenteil (251) ist unter Verdrängung des Topfschiebers (273) weiter in das Aufnahmeteil (271) eingedrungen. Der Innendichtring (278) dichtet nun den Zapfen (259) gegen das Aufnahmegehäuse (272) ab. Die durch die Werkstück-Aufspannplatte (231) hindurch geförderte Druckluft wird nun durch das Aufnahmeteil (271) hindurch in die Medienkanäle (215) gefördert. In den Spannvorrichtungen (10) wird mittels dieser Druckluft z.B. der Ringkolben (40) abgesenkt, sodass der Spannring (100) expandieren kann.

In der Figur 33 ist das Werkstück-Aufspannsystem (210) bei verriegeltem Spannsystem (1) und geschlossener Medienkupplung (250) dargestellt. Der Kombibolzen (130) hintergreift den Spannring (100). Das Bolzenteil (251) ist in das Aufnahmeteil (271) eingetaucht. Die mittels der Medienkupplung (250) übertragene Druckluft kann nun z.B. für werkstück- oder bearbeitungsspezifische Anwendungen eingesetzt werden. Auch ist es denkbar, die Adapterkupplung (290) zu öffnen. Beispielsweise wird der Industrieroboter (208) vom Werkstück-Aufspannsystem (210) getrennt. Damit wird die Druckluftzufuhr unterbrochen. Das Werkstück-Aufspannsystem (210) ist mechanisch verriegelt, sodass es sich nicht löst. Auch bei einer eventuellen Ermüdung der Druckfedern (69, 82, 91, 267, 284) der Medienkupplung (250) oder des Spannsystems (1) wird die Funktionsfähigkeit des Werkstück-Aufspannsystems (210) nicht beeinträchtigt.

Um die Werkstück-Aufspannplatte (231) mit darauf fixierten Werkstücken (360) zu wechseln, wird beispielsweise der Industrieroboter (208) mittels der Adapterkupplung (290) an die Anschlussfläche (233) angeschlossen, wie oben beschrieben. Mittels der durch die Werkstück-Aufspannplatte (231), die Medienkupplungen (250) und die Aufsetzplatte (211) geleiteten Druckluft können die Spannvorrichtungen (10) zum Lösen der Spannsysteme (1) beaufschlagt werden. Die Werkstück-Aufspannplatte (231) kann nun beispielsweise mittels des Industrieroboters (208) abgehoben werden, der über die Adapterkupplung (290) mit der Werkstück-Aufspannplatte (231) verbunden ist. Anschließend kann beispielsweise eine neue, mit zu bearbeitenden Werkstücken (360) versehene Werkstück-Aufspannplatte (231) in die Aufsetzplatte (211) eingesetzt werden.

### Bezugszeichenliste:

- 1: Spannsystem
- 9: Mittellinie

- 10: Spannvorrichtung, Baugruppe
- 11: Gehäuse
- 12: Gehäusegrundkörper, Gehäuseteil
- 13: Flanschplatte, Flansch
- 14: Positionierlanglöcher
- 15: Befestigungsschrauben
- 16: Stützrohr
- 17: Entriegelungsdruckluftanschluss an (13)
- 18: Ausblasanschluss an (13)
- 19: Sperrluftanschluss an (13)

- 20: Aufnahmeausnehmung
- 21: Zentrierspannfläche, kegelstumpfmantelförmig
- 22: Zentrierspalt
- 23: Hintergriffsabsatz
- 24: Kanalsystem
- 25: Auflagenkontrollanschluss an (13)
- 26: Spanndruckluftanschluss an (13), optional
- 27: Zylinder
- 28: Entlüftungsnut
- 29: Axialringnut

- 31: Gehäusedeckel, Gehäuseteil
- 32: Anschlagrohr
- 33: Verschlusskappenausnehmung
- 34: Sacklochbohrungen
- 35: Querbohrung
- 36: Spanndruckluftanschluss an (31), optional
- 37: Entriegelungsdruckluftanschluss an (31)
- 38: Ausblasanschluss an (31)
- 39: Sperrluftanschluss an (31)

- 40: Ringkolben
- 41: Ringkolbenfrontseite, oben
- 42: Kolbenfase, Fase
- 45: Ringkolbenboden, Kolbenboden
- 46: Federführungsbohrungen
- 47: Außenwandung
- 48: Innenwandung

- 51: Kolbenbohrung, zentral
- 52: Dichtzone, oben, Teil der Kolbeninnenabdichtung
- 53: Dichtringnut, oben, Teil der Kolbeninnenabdichtung
- 54: Dichtring, oben, Teil der Kolbeninnenabdichtung
- 55: 'Dichtzone, unten, Teil der Kolbeninnenabdichtung
- 56: Dichtringnut, unten, Teil der Kolbeninnenabdichtung
- 57: Dichtring, unten, Teil der Kolbeninnenabdichtung

- 61: Ringnut, Arbeitsringnut
- 62: Arbeitsabschnitt
- 63: Ringnutkeilfläche, kegelstumpfmantelförmig, Keilgetriebeteil
- 65: Eintauchabschnitt
- 66: Rückhubfläche, kegelstumpfmantelförmig

- 69: Schraubendruckfedern, Rückholfedern, Federelemente

- 70: Verschlusskappe
- 71: Wellenbund
- 72: Stufenbohrung
- 73: Zylinderbereich
- 74: Überströmkerben
- 75: Luftverteilbereich
- 76: Freiblasbohrungen
- 77: Führungsbohrung
- 78: Spreizfase
- 81: Federführungsringnut
- 82: Schließfeder, Schraubendruckfeder

- 85: Reinigungskolben
- 86: Kolbenstange
- 87: Durchgangsbohrung
- 88: Radialbohrung
- 89: Düsenbohrung
- 91: Schließfeder, Schraubendruckfeder

- 100: Spannring
- 101: Spannelemente, segmentartig
- 102: Einzelquerschnitt
- 105: Spannfläche, oben, plan
- 106: Aufliegefläche, unten, plan
- 107: Aufschiebekeilfläche, oben, innen
- 108: Hüllspannfläche, unten, innen
- 109: Innenfläche, zylindrisch
- 111: Spannringkeilfläche, Keilgetriebeteil
- 112: Spannringrückhubfläche
- 115: Hintergriffsausnehmung
- 116: Bohrung
- 117: Hintergriffe
- 121: Federelemente, Elastomerkörper, segmentartig
- 122: Klemmzapfen

- 130: Kombibolzen, Baugruppe
- 131: Passzylinderabschnitt
- 132: Axialanlagefläche, Anlagefläche
- 133: Spannbereich
- 134: Innenspannfläche, Spannfläche
- 135: Spannringrückhubfase
- 136: Taillenbereich
- 137: Zentrierbereich
- 138: Außenspannfläche, Spannfläche
- 139: Durchgangsbohrung

- 201: Umgebung
- 202: Maschinentisch
- 203: T-Nuten

- 205: Längsrichtung
- 206: Querrichtung
- 207: Höhenrichtung
- 208: Industrieroboter
- 209: Roboterarm

- 210: Werkstück-Aufspannsystem
- 211: Aufsetzplatte
- 212: Unterseite von (211)
- 213: Stirnfläche von (211)
- 214: Kanalausgänge
- 215: Medienkanal
- 216: Kanalsystem
- 217: horizontale Kanäle
- 218: vertikale Kanäle
- 219: Ausnehmung, topfförmig, in (211)

- 221: Oberseite von (211)

- 231: Werkstück-Aufspannplatte
- 232: Ansaugöffnungen
- 233: Stirnseite, Anschlussfläche
- 234: Eingreifausnehmungen
- 235: Stirnseite, in Längsrichtung orientiert
- 236: Energiezuführungskanal
- 237: Unterseite von (231)
- 238: Anschlusskanal

- 250: Medienkupplung
- 251: erstes Medienkupplungsteil, Bolzenteil
- 252: Festteil
- 253: Ventilschieber
- 254: Oberseite
- 255: Einsatzdeckel
- 256: Durchbruch
- 257: Leitungsraum
- 258: Befestigungsbund
- 259: Zapfen

- 261: Bohrung in (259)
- 262: Radialkanäle
- 263: Anschlagstege
- 264: Anschlagflächen
- 265: Federaufnahme
- 266: Luftkanal
- 267: Druckfeder; Federenergiespeicher
- 271: zweites Medienkupplungsteil, Aufnahmeteil
- 272: Aufnahmegehäuse
- 273: Topfschieber
- 274: Auflagebund
- 275: Gehäuseinnenraum
- 276: Außendichtring
- 277: Innenwandung von (272)
- 278: Innendichtring
- 279: Durchbrüche in (273)

- 281: Oberseite von (273)
- 282: Sternbolzen von (273)
- 283: Schubfläche von (273)
- 284: Aufnahmefeder, Druckfeder, Federenergiespeicher
- 285: Ausnehmungen in (273)

- 290: Adapterkupplung
- 291: Verriegelungsvorrichtung
- 292: Andockkupplung
- 293: Druckfedern
- 294: Sperrkolben
- 295: Sperrring
- 296: Verriegelungsgehäuse
- 297: Sperrkerbe
- 298: Elastomerkörper
- 299: Verriegelungsausnehmung

- 311: Energiezuführanschluss
- 312: erstes Energieübergabekupplungsteil
- 313: Energieführungsteil
- 314: Leitungsgehäuse
- 315: Stufenausnehmung
- 316: Zentralbolzen
- 317: Kopf von (316)
- 318: Federenergiespeicher, Verschlussfeder, Druckfeder
- 319: Verschlussschieber

- 321: Stirnseite von (319)
- 322: Axialdichtring
- 323: Kegelausnehmung
- 324: Spalt, Verschlusskanal

- 330: Energieübergabekupplung
- 331: zweites Energieübergabekupplungsteil
- 332: Verschlussstößel
- 333: Zylinderkopf
- 334: Ventilgehäuse
- 335: Druckfeder, Federenergiespeicher
- 336: Dichtring
- 337: Stirnfläche von (332)
- 338: Stirnfläche von (334)
- 339: Leitungskanal

- 341: Kanäle

- 351: Andockklotz
- 352: Verriegelungsbolzen
- 353: Kanäle

- 360: Werkstücke

## Patentansprüche

1. Werkstück-Aufspannsystem (210) zum Nachrüsten, mit einer Aufsetzplatte (211) und mit einer Werkstück-Aufspannplatte (231), die mittels mindestens eines Spannsystems (1) miteinander lösbar verbunden sind, **dadurch gekennzeichnet,**
- **dass** in der Werkstück-Aufspannplatte (231) mindestens ein Energiezuführkanal (236) angeordnet ist, der eine Anschlussfläche (233) der Werkstück-Aufspannplatte (231) mit zumindest einem ersten Medienkupplungsteil (251) verbindet und
- **dass** in der Aufsetzplatte (211) mindestens ein Medienkanal (215) ein mit dem ersten Medienkupplungsteil (251) kuppelbares zweites Medienkupplungsteil (271) mit mindestens einer Spannvorrichtung (10) des Spannsystems (1) verbindet.

2. Werkstück-Aufspannsystem (210) nach Anspruch 1, **dadurch gekennzeichnet, dass** das erste Medienkupplungsteil (251) als Bolzenteil (251) ausgebildet ist.

3. Werkstück-Aufspannsystem (210) nach Anspruch 2, **dadurch gekennzeichnet, dass** das Bolzenteil (251) einen Zapfen (259) mit stirnseitigen Radialkanälen (262) aufweist.

4. Werkstück-Aufspannsystem (210) nach Anspruch 2, **dadurch gekennzeichnet, dass** ein Kombibolzen (130) des Spannsystems (1) in der Höhenrichtung (207) länger ausgebildet ist als das Bolzenteil (251).

5. Werkstück-Aufspannsystem (210) nach Anspruch 1, **dadurch gekennzeichnet, dass** das zweite Medienkupplungsteil (271) ein zylindertopfförmiges Aufnahmegehäuse (272) hat, das einen mittels einer Aufnahmefeder (284) belasteten Topfschieber (273) umgreift.

6. Werkstück-Aufspannsystem (210) nach Anspruch 1, **dadurch gekennzeichnet, dass** mittels einer ein erstes Medienkupplungsteil (251) und ein zweites Medienkupplungsteil (271) aufweisenden Medienkupplung (250) Druckluft von der Werkstück-Aufspannplatte (231) zur Spannvorrichtung (10) übertragbar ist.

7. Werkstück-Aufspannsystem (210) nach Anspruch 6, **dadurch gekennzeichnet, dass** das erste Medienkupplungsteil (251) einen Federenergiespeicher (267) niedrigerer Federkonstante aufweist als ein Federenergiespeicher (284) des zweiten Medienkupplungsteils (271).

8. Werkstück-Aufspannsystem (210) nach Anspruch 1, **dadurch gekennzeichnet, dass** an der Anschlussfläche (233) eine Adapterkupplung (290) anschließbar ist.

9. Werkstück-Aufspannvorrichtung (210) nach Anspruch 8, **dadurch gekennzeichnet, dass** die Adapterkupplung (290) mindestens eine Energieübergabekupplung (330) und mindestens eine Andockkupplung (292) aufweist.

## Claims

1. A workpiece mounting system (210) for retrofitting, having a support plate (211) and a workpiece mounting plate (231), which are connected detachably to one another by means of at least one clamping system (1), **characterised**
- **in that** at least one energy supply channel (236) is arranged in the workpiece mounting plate (231), said energy supply channel connecting a connection face (233) of the workpiece mounting plate (231) to at least one first media coupling part (251), and
- **in that** at least one media channel (215) in the support plate (211) connects a second coupling part (271), which can be coupled to the first media coupling part (251), to at least one clamping device (10) of the clamping system (1).

2. The workpiece mounting system (210) according to Claim 1,
**characterised in that**
the first media coupling part (251) is designed as a bolt part (251).

3. The workpiece mounting system (210) according to Claim 2,
**characterised in that**
the bolt part (251) has a pin (259) with radial channels (262) on the end face.

4. The workpiece mounting system (210) according to Claim 2,
**characterised in that**
a combination bolt (130) of the clamping system (1) is longer in the height direction (207) than the bolt part (251).

5. The workpiece mounting system (210) according to Claim 1,
**characterised in that**
the second media coupling part (271) has a cylindrical pot-shaped receptacle housing (272), which fits around a pot-type slide (273), which is loaded by means of a receptacle spring (284).

6. The workpiece mounting system (210) according to Claim 1,
**characterised in that**
compressed air can be transferred from the workpiece mounting plate (231) to the clamping device (10) by means of a media coupling (250) having a first media coupling part (251) and a second media coupling part (271).

7. The workpiece mounting system (210) according to Claim 6,
**characterised in that**
the first media coupling part (251) has a spring energy store (267) with a lower spring constant than a spring energy store (284) of the second media coupling part (271).

8. The workpiece mounting system (210) according to Claim 1,
**characterised in that**
an adapter coupling (290) can be connected to the connection face (233).

9. The workpiece mounting device (210) according to Claim 8,
**characterised in that**
the adapter coupling (290) has at least one energy transmission coupling (330) and at least one docking coupling (292).

## Revendications

1. Système de bridage (210) d'une pièce à usiner pour le rééquipement, pourvu d'une plaque (211) de mise en place et d'une plaque de bridage (231) de pièce à usiner, qui au moyen d'au moins un système de serrage (1) sont assemblées l'une avec l'autre de manière amovible, **caractérisé**
- **en ce que** dans la plaque de bridage (231) de pièce à usiner est placé au moins un canal d'alimentation (236) d'énergie, qui relie une surface de raccordement (233) de la plaque de bridage (231) de pièce à usiner avec au moins un premier coupleur de fluides (251) et
- **en ce que** dans la plaque (211) de mise en place, au moins un canal à fluides (215) relie un deuxième coupleur de fluides (271), susceptible d'être couplé avec le premier coupleur de fluides (251) avec au moins un dispositif de serrage (10) du système de serrage (1).

2. Système de bridage (210) d'une pièce à usiner selon la revendication 1, **caractérisé en ce que** le premier coupleur de fluides (251) est conçu sous la forme d'une partie de boulon (251).

3. Système de bridage (210) d'une pièce à usiner selon la revendication 2, **caractérisé en ce que** la partie de boulon (251) comporte un tenon (259) pourvu de canaux radiaux (262) frontaux.

4. Système de bridage (210) d'une pièce à usiner selon la revendication 2, **caractérisé en ce qu'**un boulon mixte (130) du système de serrage (1) est conçu en étant plus haut dans la direction de la hauteur (207) que la partie de boulon (251).

5. Système de bridage (210) d'une pièce à usiner selon la revendication 1, **caractérisé en ce que** le deuxième coupleur de fluides (271) dispose d'un corps de logement (272) en forme de pot cylindrique, qui entoure un coulisseau en pot (273) contraint au moyen d'un ressort de logement (284).

6. Système de bridage (210) d'une pièce à usiner selon la revendication 1, **caractérisé en ce qu'**au moyen d'un couplage de fluides (250) comportant un premier coupleur de fluides (251) et un deuxième coupleur de fluides (271), de l'air comprimé est transmissible de la plaque de bridage (231) de pièce à usiner vers le dispositif de serrage (10).

7. Système de bridage (210) d'une pièce à usiner selon la revendication 6, **caractérisé en ce que** le premier coupleur de fluides (251) comporte un accumulateur d'énergie (267) à ressort, de constante de ressort plus faible que celle d'un accumulateur d'énergie (284) à ressort du deuxième coupleur de fluides (271).

8. Système de bridage (210) d'une pièce à usiner selon la revendication 1, **caractérisé en ce que** sur la surface de raccordement (233) est susceptible d'être raccordé un couplage d'adaptateur (290).

9. Système de bridage (210) d'une pièce à usiner selon la revendication 8, **caractérisé en ce que** le couplage d'adaptateur (290) comporte au moins un couplage de transfert d'énergie (330) et au moins un couplage d'accostage (292).
